(19) Europäisches Patentamt / European Patent Office / Office européen des brevets

(11) **EP 4 733 362 A1**

(12) **EUROPEAN PATENT APPLICATION**

(43) Date of publication:
29.04.2026 Bulletin 2026/18

(21) Application number: 25209406.5

(22) Date of filing: 17.10.2025

(51) International Patent Classification (IPC):
*C09D 11/101* (2014.01)   *C09D 11/38* (2014.01)

(52) Cooperative Patent Classification (CPC):
C09D 11/38; C09D 11/101

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 18.10.2024 JP 2024184462

(71) Applicants:
• artience Co., Ltd.
Chuo-ku
Tokyo 104-0031 (JP)
• TOYOCOLOR CO., LTD.
Tokyo 104-8381 (JP)

(72) Inventors:
• KAMEYAMA, Yuji
TOKYO, 104-8381 (JP)
• YAMAGUCHI, Koji
TOKYO, 104-8381 (JP)
• YOSHIKAWA, Takumi
TOKYO, 104-8381 (JP)
• SUZUKI, Norio
TOKYO, 104-8381 (JP)

(74) Representative: Plasseraud IP
104 Rue de Richelieu
CS92104
75080 Paris Cedex 02 (FR)

(54) **ACTIVE ENERGY RAY-CURABLE INKJET INK AND PRINTED MATTER**

(57) Provided is an active energy ray-curable inkjet ink including: a polymerizable compound (excluding a polymerizable compound having a siloxane bond) (A); and a siloxane-based surface additive, wherein the polymerizable compound (A) includes 3% to 25% by mass of 5-methyl-3-vinyloxazolidine-2-one, and a difunctional or higher acrylate compound, the sum of contents of both components is within a range from 45% to 85% by mass, the siloxane-based surface additive includes 1% to 5% by mass of a siloxane-based surface additive having an HLB value of 1.3 to 13.0, and contents of the polymerizable compound (A), a monofunctional (meth)acrylate compound, and a trifunctional or higher functional (meth)acrylate compound are further specified.

## Description

Technical Field

Embodiments of the present invention relate to an active energy ray-curable inkjet ink, and a printed matter obtained by printing the active energy ray-curable inkjet ink on a printing substrate.

Background Art

In recent years, a digital printing method has been adopted in a printing market, which focuses on productivity, such as a commercial printing market, an office printing market, and a special printing market. Reasons for this include: a printed matter can be obtained at low cost in a short time because the digital printing method does not require plate making; a printing apparatus is smaller and less expensive than a printing apparatus used in a forme-based printing method; and it is possible to easily obtain a uniform printed matter regardless of a skill of a person engaged in printing.

In particular, an inkjet printing method, which is a type of digital printing method, is superior as compared with other digital printing methods, such as in running cost for printing, ease of full-color printing, and independency of an installation environment of a printing apparatus on print quality. Therefore, in the printing market, a demand for adopting the inkjet printing method is particularly increasing.

An ink used in the inkjet printing method is in a wide variety of forms, such as a water type, an oil type, a solvent type, and an active energy ray-curable type. Among these, in recent years, a demand for an active energy ray-curable ink is increasing due to: the fact that a printed matter with high print quality can be printed on a non-permeable printing substrate, such as a resin film or glass; a short drying (curing) time; and properties such as the strength of a printed matter.

Note that in the present discloser, an ink used in the inkjet printing method is also referred to simply as "inkjet ink".

Meanwhile, in recent years, a demand from a market for environmental consideration has been increasing. From this viewpoint, as a light source of an active energy ray for curing an active energy ray-curable inkjet ink, a light emitting diode (LED) light source is often adopted. However, the LED light source has a feature that a wavelength range of an active energy ray to be emitted is narrow, and therefore, when used in combination with an active energy ray-curable inkjet ink, improvement of curability is an issue.

In addition, in recent years, technological innovation of an inkjet head has progressed, and an inkjet head capable of discharging an ink at a high frequency of 20 kHz or more is also being sold. Furthermore, the active energy ray-curable inkjet ink described above is being increasingly installed on a line printer where one or more of these inkjet heads are mounted to have a length equal to or longer than the width of a substrate.

In a line printer installed with active energy ray-curable inkjet ink, it is necessary to sufficiently cure the active energy ray-curable inkjet ink discharged from an inkjet head onto a printing substrate using active energy rays irradiated from a light source installed on a downstream side of the inkjet head. A print image includes not only an image having a high coverage rate (for example, a solid image (image printed at a coverage rate of 100% so as to cover the surface of a printing substrate)) but also an image having a low coverage rate, such as a light color image. In this way, the active energy ray-curable inkjet ink in recent years is required to enable stable and high-speed manufacture of a printed matter having excellent print quality, regardless of the type of print image, even when the wavelength range of active energy rays emitted is narrow as in LED light sources.

However, when an attempt is made to improve the curability of the active energy ray-curable inkjet ink, the inkjet ink is cured before it is sufficiently wet-spread on the printing substrate, resulting in a new issue that the print quality and adhesion decrease. Patent Literature 1 discloses a radiation-curable inkjet composition including vinylmethyloxazolidinone and 2-(2-vinyloxyethoxy)ethyl(meth)acrylate as a polymerizable compound, and Patent Literature 2 discloses a radiation-curable inkjet composition including predetermined amounts of glycerol diacrylate and/or glycerol triacrylate. The inkjet compositions disclosed in Patent Literatures 1 and 2 are said to provide a printed matter having low viscosity but excellent abrasion resistance, and the inkjet compositions are cured using an LED light source in examples.

Patent Literature 3 discloses an active energy ray-curable ink composition for an LED light source, including 2-(2-vinyloxyethoxy)ethyl(meth)acrylate and a polymerization accelerator (sensitizer described below), and having a content of a monofunctional polymerizable compound in a certain amount or less. The ink composition disclosed in Patent Literature 3 is said to be excellent in curability, adhesion, and hardness of printed matter even when irradiated with ultraviolet rays from an LED light source.

Patent Literature 4 discloses an active energy ray-curable ink composition including an acylphosphine oxide-based compound as a photopolymerization initiator, further including a mercapto-modified (meth)acrylate and/or an anthracene compound in combination. The ink composition disclosed in Patent Literature 4 is said to be excellent in storage stability, and also in curability when an LED light source is used.

Citation List

Patent Literature

Patent Literature 1: JP 2021-042321 A
Patent Literature 2: JP 2023-163470 A
Patent Literature 3: JP 2022-184084 A
Patent Literature 4: JP 2023-097118 A

Summary of Invention

Technical Problem

However, as a result of evaluation by the present inventors, it was found that the inkjet compositions specifically disclosed in Patent Literatures 1 to 4 may have insufficient print quality and adhesion, depending on printing conditions. Actually, in the examples of Patent Literatures 1 and 2, curability and adhesion are evaluated, but they are evaluated using a bar coater-coated product. In the examples of Patent Literatures 3 and 4, a spin coater-coated product is used. Therefore, for each of the patent literatures, it is difficult to say that the influence of wet-spreading when printing is actually performed using a printing device such as a line printer is sufficiently examined.

As described above, it has been conventionally extremely difficult to obtain an active energy ray-curable inkjet ink having both print quality and adhesion, and curability, and further having favorable discharge stability, even when an LED light source is used.

It is therefore an object of an embodiment of the present invention to provide an active energy ray-curable inkjet ink excellent in all of curability, adhesion, print quality, and discharge stability.

Solution to Problem

As a result of diligent studies, the present inventors have found that all of the above-described issues can be solved simultaneously at high levels by an active energy ray-curable inkjet ink having the following composition.

That is, an embodiment of the present invention relates to an active energy ray-curable inkjet ink described in [1] to [6] below, a printed matter obtained by using the active energy ray-curable inkjet ink, described in [7], and a use of the active energy ray-curable inkjet ink, described in [8] to [12] below.

[1] An active energy ray-curable inkjet ink including:

a polymerizable compound (excluding a polymerizable compound having a siloxane bond) (A); and
a siloxane-based surface additive, wherein
the total content of the polymerizable compound (A) is within a range from 45% to 95% by mass of the total amount of the inkjet ink,
the polymerizable compound (A) includes 5-methyl-3-vinyloxazolidine-2-one and a difunctional or higher acrylate compound,
the content of the 5-methyl-3-vinyloxazolidine-2-one is within a range from 3% to 25% by mass of the total amount of the inkjet ink,
the sum of the content of the 5-methyl-3-vinyloxazolidine-2-one and the content of the difunctional or higher acrylate compound is within a range from 45% to 85% by mass of the total amount of the inkjet ink,
the siloxane-based surface additive includes a siloxane-based surface additive having an HLB value of 1.3 to 13.0,
the content of the siloxane-based surface additive having the HLB value of 1.3 to 13.0 is within a range from 1% to 5% by mass of the total amount of the inkjet ink,
the content of a monofunctional (meth)acrylate compound (excluding a monofunctional (meth)acrylate compound having a siloxane bond) is 1.0 times or less of the content of the difunctional or higher acrylate compound, and
the content of a trifunctional or higher (meth)acrylate compound (excluding a trifunctional or higher (meth)acrylate compound having a siloxane bond) is 25% by mass or less of the total amount of the inkjet ink.

[2] The active energy ray-curable inkjet ink according to [1], wherein the siloxane-based surface additive having the HLB value of 1.3 to 13.0 includes a (meth)acryloyl group.
[3] The active energy ray-curable inkjet ink according to [1] or [2], wherein the difunctional or higher acrylate compound includes an alkanediol diacrylate having 10 to 15 carbon atoms.

[4] The active energy ray-curable inkjet ink according to any one of [1] to [3], wherein the content of a polymerizable compound having one or more vinyl groups is within a range from 3% to 45% by mass of the total amount of the polymerizable compound (A).

[5] The active energy ray-curable inkjet ink according to any one of [1] to [4], wherein the difunctional or higher acrylate compound includes an alkanediol diacrylate, and a difference between a weighted average value of an HLB value of the 5-methyl-3-vinyloxazolidine-2-one and an HLB value of the alkanediol diacrylate, and an HLB value of the siloxane-based surface additive having the HLB value of 1.3 to 13.0 is within a range from 0 to 3.5.

[6] The active energy ray-curable inkjet ink according to any one of [1] to [5], wherein the content of the siloxane-based surface additive having the HLB value of 1.3 to 13.0 is within a range from 0.050 to 1.0 based on mass when the content of the 5-methyl-3-vinyloxazolidine-2-one is 1 based on mass.

[7] A printed matter obtained by printing the active energy ray-curable inkjet ink according to any one of [1] to [6] on a printing substrate.

[8] A printing method including: a step of discharging the active energy ray-curable inkjet ink according to any one of [1] to [6] from an inkjet head onto a printing substrate; and a step of irradiating the active energy ray-curable inkjet ink discharged onto the printing substrate with an active energy ray, and curing the active energy ray-curable inkjet ink.

[9] The printing method according to [8], wherein the active energy ray includes an LED ray.

[10] The printing method according to [8] or [9], wherein the printing method is performed using a line printer.

[11] The printing method according to any one of [8] to [10], wherein the active energy ray-curable inkjet ink is discharged at a high frequency of 20 kHz or more in the printing method.

[12] The printing method according to any one of [8] to [11], wherein the step of curing the active energy ray-curable inkjet ink includes: a pre-curing step; and a main curing step, and the pre-curing step includes a step of irradiating an ultraviolet ray having a maximum intensity of 2 to 20 $W/cm^2$, using an LED light source.

Effect of the Invention

The active energy ray-curable inkjet ink, which is an embodiment of the present invention, is excellent in all of curability, adhesion, print quality, and discharge stability.

Description of Embodiments

Hereinafter, an active energy ray-curable inkjet ink (hereinafter, also referred to simply as "inkjet ink according to the present embodiment"), which is an embodiment of the present invention, will be described in detail. Note that the present invention is not limited to the following embodiments, and various modifications carried out without changing the gist of the present invention are also included.

In the present disclosure, the terms "(meth)acrylate", "(meth)acryloyl", and "(meth)acrylic acid" represent "acrylate and/or methacrylate", "acryloyl and/or methacryloyl", and "acrylic acid and/or methacrylic acid", respectively.

To begin, a mechanism by which the above-described effect is exhibited by the composition of the inkjet ink according to the present embodiment will be described. However, the mechanism described below is an inference by the present inventors and does not limit the present invention at all.

First, the inkjet ink according to the present embodiment includes a polymerizable compound (excluding a polymerizable compounds having a siloxane bond) (A). The polymerizable compound (A) includes 3% to 25% by mass of 5-methyl-3-vinyloxazolidine-2-one. It is generally known that a cyclic N-vinyl compound has a higher reaction rate with a radical derived from a photopolymerization initiator than a (meth)acrylate compound. The reaction rate of 5-methyl-3-vinyloxazolidine-2-one is particularly higher than those of other cyclic N-vinyl compounds. As a reason for this, it is considered that, unlike N-vinylcaprolactam and N-vinylpyrrolidone, which are generally known as cyclic N-vinyl compounds, 5-methyl-3-vinyloxazolidine-2-one has an oxygen atom in a ring structure. That is, it is considered that electrons in the ring structure are attracted to the oxygen atom, thereby facilitating a vinyl group to react with a radical derived from a photopolymerization initiator. Thus, the inkjet ink according to the present embodiment including a certain amount of 5-methyl-3-vinyloxazolidine-2-one has excellent curability. It is also considered that adhesion to a printing substrate improves due to an intermolecular interaction such as hydrogen bonds formed by nitrogen and oxygen atoms present in the 5-methyl-3-vinyloxazolidine-2-one.

The inkjet ink according to the present embodiment includes a difunctional or higher acrylate compound as the polymerizable compound (A). Among polymerizable groups that the polymerizable compound can have, an acryloyl group is excellent in reactivity. By using a polymerizable compound having multiple polymerizable groups, a three-dimensional crosslinked structure is formed through a polymerization reaction.

As described above, in the inkjet ink according to the present embodiment, a polymerizable compound excellent in reactivity and adhesion is used, and the amount thereof is specifically defined. That is, in the inkjet ink according to the present embodiment, the total content of the polymerizable compound (A) is within a range from 45% to 95% by mass of the total amount of the inkjet ink, the content of the 5 methyl-3-vinyloxazolidine-2-one is within a range from 3% to 25% by mass of the total amount of the inkjet ink, and the sum of the content of the 5-methyl-3-vinyloxazolidine-2-one and the content of the difunctional or higher acrylate compound is within a range from 45% to 85% by mass of the total amount of the inkjet ink. Although the detailed principle is not clear, when the 5-methyl-3-vinyloxazolidine-2-one and the difunctional or higher acrylate compound are each used in certain amounts or more, the polymerization reaction of the difunctional or higher acrylate compound is promoted by the 5-methyl-3-vinyloxazolidine-2-one, and curability and adhesion of the inkjet ink can be easily improved, even with a small amount of radical generation.

Meanwhile, in the inkjet ink according to the present embodiment, the content of a monofunctional (meth)acrylate compound (excluding monofunctional (meth)acrylate compounds having a siloxane bond) is 1.0 times, or less, of the content of the difunctional or higher acrylate compound. When the content of the monofunctional acrylate compound is within the above range, radicals generated from the photopolymerization initiator or the like efficiently react with the 5-methyl-3-vinyloxazolidine-2-one, and the curability and adhesion can be further improved.

In the inkjet ink according to the present embodiment, the content of a trifunctional or higher (meth)acrylate compound (excluding trifunctional or higher (meth)acrylate compounds having a siloxane bond) is 25% by mass or less of the total amount of the inkjet ink. Thus, curing shrinkage that may occur when the inkjet ink is cured can be prevented, while achieving both favorable curability and favorable adhesion.

Meanwhile, the inkjet ink according to the present embodiment includes a siloxane-based surface additive having an HLB value of 1.3 to 13.0, as a siloxane-based surface additive. The content of the siloxane-based surface additive having the HLB value of 1.3 to 13.0 is within a range from 1% to 5% by mass of the total amount of the inkjet ink. By setting the HLB value of the siloxane-based surface additive to 1.3 or more, significant deterioration of discharge stability is prevented, and by setting the HLB value of the siloxane-based surface additive to 13.0 or less, wet-spreadability on printing substrates is ensured, and improvement of print quality of printed matter is achieved.

However, the siloxane-based surface additive having the HLB value of 1.3 to 13.0 has a high rate of orientation to an interface. Thus, when the siloxane-based surface additive having the HLB value of 1.3 to 13.0 is simply used, the siloxane-based surface additive is oriented to an interface within an inkjet head, and discharge stability may deteriorate. Furthermore, after printing, the siloxane-based surface additive is oriented to the interface between the printing substrate and the inkjet ink, and thus adhesion may deteriorate. In contrast, in the inkjet ink according to the present embodiment, a predetermined amount of 5-methyl-3-vinyloxazolidine-2-one is appropriately compatible with the siloxane-based surface additive. Consequently, when the inkjet ink is discharged, the orientation of the siloxane-based surface additive to the interface is controlled, and the discharge stability particularly improves. After the inkjet ink impacts the printing substrate, excessive orientation to the interface is controlled in a similar manner, and the adhesion improves. Although the principle is not clear, when printing is performed on a printing substrate having pores, such as standard coated paper, oxygen inhibition due to air existing in the pores is controlled by co-orientation of 5-methyl-3-vinyloxazolidine-2-one and the siloxane-based surface additive having the HLB value of 1.3 to 13.0, and thus a high curing rate is easily maintained, and adhesion to the printing substrate having pores improves.

As described above, in order to solve the issues described above, the composition of the inkjet ink according to the present embodiment is indispensable. However, the mechanism for solving the issues described above is an inference by the present inventors and does not limit the present invention.

Note that the inkjet inks disclosed specifically in Patent Literatures 1 to 4 each differ from the inkjet ink according to the present embodiment in that the content of the siloxane-based surface additive having the HLB value of 1.3 to 13.0 is less than 1% by mass of the total amount of the inkjet ink.

In Patent Literature 1, 5-methyl-3-vinyloxazolidine-one (vinylmethyloxazolidinone) is used as an essential component, and in the examples, the 5-methyl-3-vinyloxazolidine -2-one is used in combination with dipropylene glycol diacrylate, which is a difunctional or higher acrylate compound. However, no specific example is disclosed where the content of 5-methyl-3-vinyloxazolidine-2-one is 25% by mass or less, and the sum of the content of the 5-methyl-3-vinyloxazolidine-2-one and the content of a difunctional or higher acrylate compound is 45% by mass or more.

In addition, Patent Literature 2 does not disclose a specific example of an inkjet ink including 5-methyl-3-vinyloxazolidine-2-one and having a content of a trifunctional or higher (meth)acrylate compound (excluding (meth)acrylate compounds having a siloxane bond) of 25% by mass or less.

Furthermore, Patent Literatures 3 and 4 do not disclose a specific example using 5-methyl-3-vinyloxazolidine-2-one, and the specification does not mention the 5-methyl-3-vinyloxazolidine-2-one at all. In particular, in the examples of Patent Literature 4, the difunctional or higher acrylate compound included in the above-described specific example is only "Miramer M240", and the amount thereof is much smaller than the total content of monofunctional (meth)acrylate compounds.

Patent Literatures 1 to 4 do not describe or suggest the composition and the effects of the composition of the inkjet ink according to the present embodiment, where a certain amount of a siloxane-based surface additive having an HLB value of 1.3 to 13.0 is used together with 5-methyl-3-vinyloxazolidine-2-one and a difunctional or higher acrylate compound, and further the amount of each component is adjusted.

Next, each component configuring the inkjet ink according to the present embodiment will be described in detail below.

<Polymerizable compound>

In the present disclosure, a polymerizable compound refers to a compound having a function where a polymerization reaction and/or a crosslinking reaction proceeds via radicals generated from a photopolymerization initiator or the like described below, thereby curing a composition including a polymerizable compound. Any compound having the above-described properties can be used as the polymerizable compound without particular limitation. Specifically, a monomer, an oligomer, a polymer, and the like can be used as the polymerizable compound. Here, the "monomer" is the smallest unit in a polymer obtained through a polymerization reaction and/or a crosslinking reaction, and represents a compound having one or more polymerizable groups. Meanwhile, both the "oligomer" and the "polymer" are a polymer where multiple monomers are bonded to each other, and which has a polymerizable group. Both are classified depending on polymerization degree. Specifically, those having a polymerization degree of 2 to 5 are "oligomers", and those having a polymerization degree of 6 or more are "polymers". However, monomers used for imparting a photopolymerizable group to an oligomer or a polymer are not included in the monomers configuring said oligomers and polymers. For example, a photopolymerizable urethane oligomer obtained by reacting a urethane oligomer having a terminal isocyanate group, which is a reaction product of 1,6-hexanediol and isophorone diisocyanate, with 2-hydroxyethyl acrylate, includes 1,6-hexanediol and isophorone diisocyanate as monomers.

Note that the term "polymerizable group" in the present disclosure is a functional group capable of reacting with a radical, and examples thereof include a (meth)acryloyl group and a vinyl group. The term "monofunctional" as described below refers to a compound having only one polymerizable group in one molecule, and "difunctional" and "trifunctional" refer to a compound having two polymerizable groups in one molecule, and a compound having three polymerizable groups in one molecule, respectively. Difunctional and higher are collectively referred to as "polyfunctional".

Although a compound having a polymerizable group can be used as a siloxane-based surface additive in the inkjet ink according to the present embodiment as described below, such a compound, that is, a polymerizable compound having a siloxane bond, is not included in the "polymerizable compound" in the present disclosure.

The total content of the polymerizable compound (A) in the inkjet ink according to the present embodiment is within a range from 45% to 95% by mass, preferably from 55% to 90% by mass, and particularly preferably from 60% to 88% by mass, of the total amount of the inkjet ink. By keeping the total content of the polymerizable compound (A) within the above ranges, it becomes easy to prepare an inkjet ink excellent in all of curability, adhesion, discharge stability, and print quality.

<<5-methyl-3-vinyloxazolidine-2-one>>

As described above, the inkjet ink according to the present embodiment includes 5-methyl-3-vinyloxazolidine-2-one as a polymerizable compound. The content of the 5-methyl-3-vinyloxazolidine-2-one is within a range from 3% to 25% by mass of the total amount of the inkjet ink.

As described above, 5-methyl-3-vinyloxazolidine-2-one is particularly excellent in curability as compared with N-vinyl compounds other than the 5-methyl-3-vinyloxazolidine-2-one. 5-methyl-3-vinyloxazolidine-2-one is also excellent in adhesion, safety, and odor, and is therefore an essential material for the inkjet ink according to the present embodiment.

The content of 5-methyl-3-vinyloxazolidine-2-one is preferably within a range from 3% to 25% by mass, more preferably from 4% to 25% by mass, and even more preferably from 5% to 20% by mass, of the total amount of the inkjet ink according to the present embodiment. By keeping the content of the 5-methyl-3-vinyloxazolidine-2-one within the above ranges, and further combining it with a difunctional or higher acrylate compound, an inkjet ink excellent in curability and adhesion can be obtained. As described above, by using in combination with a siloxane-based surface additive having an HLB value of 1.3 to 13.0, not only can excellent discharge stability and print quality both be achieved, but also a high curing rate can be realized even for a printing substrate, such as standard coated paper, which can be subject to oxygen inhibition by air included in pores, and adhesion to the printing substrate having the pores can be improved.

<Difunctional or higher acrylate compound>

The acrylate compound in the present disclosure is a compound including an acryloyl group as a polymerizable group. As described above, the inkjet ink according to the present embodiment includes a difunctional or higher acrylate compound as a polymerizable compound, that is, a polymerizable compound having only an acryloyl group as a polymerizable group and including two or more acryloyl groups.

The sum of the content of the 5-methyl-3-vinyloxazolidine-2-one and the content of the difunctional or higher acrylate compound is preferably within a range from 45% to 85% by mass, and more preferably from 55% to 85% by mass, of the total amount of the inkjet ink. In the inkjet ink according to the present embodiment, by combining the content of the 5-methyl-3-vinyloxazolidine-2-one, and the content of the difunctional or higher acrylate compounds such that the total thereof falls within the above ranges, both curability and adhesion can be improved together.

Specific examples of a difunctional acrylate monomer (monomer having two acryloyl groups as a polymerizable group) included in the difunctional or higher acrylate compound include 1,3-propanediol diacrylate, 1,4-butanediol diacrylate, 1,3-butylenediol diacrylate, 1,6-hexanediol diacrylate, ethylene oxide-modified 1,6-hexanediol diacrylate, propylene oxide-modified 1,6-hexanediol diacrylate, 1,9-nonanediol diacrylate, 1,10-decanediol diacrylate, neopentyl glycol diacrylate, ethylene oxide-modified neopentyl glycol diacrylate, propylene oxide-modified neopentyl glycol diacrylate, 3-methyl-1,5-pentanediol diacrylate, 2,4-dimethyl-1,5-pentanediol diacrylate, 2-ethyl-2-butylpropanediol diacrylate, 2-ethyl-2-butylbutanediol diacrylate, ethylene oxide-modified cyclohexanemethanol diacrylate, ethylene glycol diacrylate, diethylene glycol diacrylate, triethylene glycol diacrylate, polyethylene glycol 200 diacrylate, polyethylene glycol 300 diacrylate, polyethylene glycol 400 diacrylate, hydroxypivalic acid neopentyl glycol diacrylate, bisphenol A diacrylate, ethylene oxide-modified bisphenol A diacrylate, propylene oxide-modified bisphenol A diacrylate, bisphenol F diacrylate, ethylene oxide-modified bisphenol F diacrylate, propylene oxide-modified bisphenol F diacrylate, dipropylene glycol diacrylate, tripropylene glycol diacrylate, polypropylene glycol diacrylate, ethylene oxide-modified isocyanuric acid diacrylate, tricyclodecanediacrylate, dimethyloltricyclodecanediacrylate, cyclohexanedimethanol diacrylate, trimethylolpropane diacrylate, neopentyl glycol-modified trimethylolpropane diacrylate, and dicyclopentanyl diacrylate.

Another example of the difunctional acrylate monomer is a polyfunctional acrylate compound having three or more polymerizable groups (specific example will be described below), where two polymerizable groups are left untouched, and a primary or secondary organic amine is added (Michael addition) to the remaining polymerizable groups.

Specific examples of a trifunctional or higher acrylate monomer (monomer having three or more acryloyl groups as a polymerizable group) included in the difunctional or higher acrylate compound include trimethylolpropane triacrylate, trimethylolethane triacrylate, ethylene oxide-modified trimethylolpropane triacrylate, propylene oxide-modified trimethylolpropane triacrylate, glycerol triacrylate, ethylene oxide-modified glycerol triacrylate, propylene oxide-modified glycerol triacrylate, ethylene oxide-modified isocyanuric acid triacrylate, propylene oxide-modified isocyanuric acid triacrylate, propylene oxide-modified dipentaerythritol triacrylate tetramethylolmethane triacrylate, pentaerythritol triacrylate, dipentaerythritol triacrylate, tri(acryloyloxyethyl)isocyanurate, hydroxypivalaldehyde-modified dimethylolpropane triacrylate, sorbitol triacrylate, pentaerythritol tetraacrylate, sorbitol tetraacrylate, ditrimethylolpropane tetraacrylate, ethylene oxide-modified pentaerythritol tetraacrylate, propylene oxide-modified pentaerythritol tetraacrylate, tetramethylolmethane tetraacrylate, sorbitol pentaacrylate, dipentaerythritol pentaacrylate, dipentaerythritol hexaacrylate, sorbitol hexaacrylate, phosphazene alkylene oxide-modified hexaacrylate, and ε-captolactone modified dipentaerythritol hexaacrylate.

Further, a difunctional or higher acrylate oligomer (oligomer having two or more acryloyl groups as a polymerizable group) may be used as the difunctional or higher acrylate compound. The number of polymerizable groups included in the difunctional or higher acrylate oligomer is preferably 2 to 6 per molecule from the viewpoint of balance of curability, discharge stability, and adhesion. The number of polymerizable groups is more preferably 2 to 4, and particularly preferably 2. The mass average molecular weight of the difunctional or higher acrylate oligomer is preferably within a range from 400 to 6,000, and more preferably from 500 to 4,500. Note that a method of measuring the mass average molecular weight is the same as that of a pigment dispersing resin described below.

Examples of the difunctional or higher acrylate oligomer used include: a urethane (meth)acrylate oligomer such as an aliphatic urethane (meth)acrylate oligomer and an aromatic urethane (meth)acrylate oligomer; an acrylic (meth)acrylate oligomer; a polyester (meth)acrylate oligomer; a polyether (meth)acrylate oligomer; and an epoxy (meth)acrylate oligomer. The oligomer described above may be modified, and examples of the modification include sulfonic acid modification, phosphoric acid modification, amino modification, and mercapto modification.

In an embodiment, alkanediol diacrylate is preferably used as the above difunctional or higher acrylate compound. The alkanediol diacrylate improves curability and print quality of the inkjet ink including the alkanediol diacrylate, as compared with a case where only another difunctional or higher acrylate compound is used. In the inkjet ink according to the present embodiment, from the viewpoint of improving the curability and print quality, an alkanediol diacrylate having 10 to 15 carbon atoms can be preferably used, and an alkanediol acrylate having 10 to 12 carbon atoms can be particularly preferably used. Among the difunctional acrylate monomers listed above, examples of alkanediol diacrylate having 10 to 15 carbon atoms include 1,4-butanediol diacrylate, 1,3-butylenediol diacrylate, 1,6-hexanediol diacrylate, 1,9-nonanediol diacrylate, neopentyl glycol diacrylate, 3-methyl-1,5-pentanediol diacrylate, 2,4-dimethyl-1,5-pentanediol diacrylate, and 2-ethyl-2-butylpropanediol diacrylate.

Note that the carbon atoms of alkanediol diacrylate described above also includes the number of carbon atoms included in the acryloyl group. For example, "alkanediol diacrylate having 12 carbon atoms" refers to a compound including two acryloyl groups, and one alkylene group having six carbon atoms.

The inkjet ink according to the present embodiment preferably includes two or more types of alkanediol diacrylate having 10 to 15 carbon atoms, and preferably includes two or more types of alkanediol diacrylate having 10 to 12 carbon atoms. Here, it is particularly preferable to include an alkanediol diacrylate which includes an alkylene group having a branched structure, and an alkanediol diacrylate which includes an alkylene group having no branched structure. Although the detailed mechanism is not clear, by using the alkanediol diacrylate including an alkylene group having a branched structure, and the alkanediol diacrylate including an alkylene group having no branched structure together, it becomes easy to obtain an ink excellent in adhesion and discharge stability, and a printed matter excellent in solid filling and print quality.

Examples of combinations of the alkanediol diacrylate including an alkylene group having a branched structure, and the alkanediol diacrylate including an alkylene group not having a branched structure, include a combination of 1,3-butylenediol diacrylate and 1,4-butanediol diacrylate, a combination of 1,3-butylenediol diacrylate and 1,6-hexanediol diacrylate, a combination of 1,3-butylenediol diacrylate and 1,9-nonanediol diacrylate, a combination of 3-methyl-1,5-pentanediol diacrylate and 1,4-butanediol diacrylate, a combination of 3-methyl-1,5-pentanediol diacrylate and 1,6-hexanediol diacrylate, a combination of 3-methyl-1,5-pentanediol diacrylate and 1,9-nonanediol diacrylate, a combination of neopentyl glycol diacrylate and 1,4-butanediol diacrylate, a combination of neopentyl glycol diacrylate and 1,6-hexanediol diacrylate, and a combination of neopentyl glycol diacrylate and 1,9-nonanediol diacrylate. Among these, from the viewpoint of obtaining an inkjet ink excellent in all of curability, adhesion, discharge stability, and print quality of printed matter, it is preferable to select one or more combinations selected from the group consisting of a combination of 1,3-butylenediol diacrylate and 1,4-butanediol diacrylate, a combination of 1,3-butylenediol diacrylate and 1,6-hexanediol diacrylate, a combination of 3-methyl-1,5-pentanediol diacrylate and 1,4-butanediol diacrylate, and a combination of 3-methyl-1,5-pentanediol diacrylate and 1,6-hexanediol diacrylate.

When an alkanediol diacrylate including an alkylene group having a branched structure, and an alkanediol diacrylate including an alkylene group not having a branched structure are used together, a value expressed by WB / WN is preferably within a range from 1.2 to 18, and particularly preferably from 1.5 to 9.0, where the content of the alkanediol diacrylate including an alkylene group having a branched structure is WB (mass%), and the content of the alkanediol diacrylate including an alkylene group not having a branched structure is WN (mass%), relative to the total amount of the inkjet ink. By setting the value expressed by WB/WN within the above ranges, it is easy to obtain an inkjet ink excellent in adhesion, discharge stability, and print quality of printed matter.

<<Monofunctional (meth)acrylate compound>>

The inkjet ink according to the present embodiment may include a monofunctional (meth)acrylate compound (excluding polymerizable compounds having a siloxane bond). However, in this case, the content of the monofunctional (meth)acrylate compound (excluding polymerizable compounds having a siloxane bond) is preferably 1.0 times or less, more preferably 0.8 times or less, and particularly preferably 0.5 times or less, of the content of the difunctional or higher acrylate compound. By keeping the content of the monofunctional (meth)acrylate compound within the above ranges, polymerization reaction and/or crosslinking reaction can proceed mainly with 5-methyl-3-vinyloxazolidine-2-one and a difunctional or higher acrylate compound, and curability and adhesion can be further improved. In addition, print quality is also improved with the improvement of the curability.

Note that the content of the monofunctional (meth)acrylate compound (excluding polymerizable compounds having a siloxane bond) included in the inkjet ink according to the present embodiment may be 0.0 times the content of the difunctional or higher acrylate compound. Here, "0.0 times" means that a target compound is substantially not included. Note that "substantially not included" means that the target component is not intentionally added, and does not prevent contamination as, for example, impurities or by-products. Specifically, when the amount of contamination as impurities or by-products is 0.1% by mass or less (preferably 0.05% by mass or less) of the total amount of the inkjet ink, it is considered to be included in a state of "substantially not included".

For the same reason, that is, in order to improve curability and adhesion, the content of the monofunctional (meth)acrylate compound (excluding polymerizable compounds having a siloxane bond) of the total amount of the inkjet ink according to the present embodiment is preferably 20% by mass or less (0% by mass, i.e. no need to include), and particularly preferably 10% by mass or less (0% by mass, i.e. no need to include).

Specific examples of the monofunctional (meth)acrylate compound include monofunctional (meth)acrylate monomers (monomers having one (meth)acryloyl group as a polymerizable group) such as benzyl (meth)acrylate, 2-phenoxyethyl (meth)acrylate, ethylene oxide-modified 2-phenoxyethyl (meth)acrylate, propylene oxide-modified 2-phenoxyethyl (meth)acrylate, dicyclopentenyl (oxyethyl)(meth)acrylate, 2-methoxyethyl (meth)acrylate, methoxytriethylene glycol (meth)acrylate, 2-ethoxyethyl (meth)acrylate, 2-(2-ethoxyethoxy) ethyl (meth)acrylate, methoxydipropylene glycol (meth)acrylate, dipropylene glycol (meth)acrylate, ethylene oxide-modified nonylphenol acrylate, propylene oxide-modified nonylphenol (meth)acrylate, ethylene oxide-modified o-phenylphenol (meth)acrylate, ethylene oxide-modified 2-ethylhexyl (meth)acrylate, β-carboxyethyl (meth)acrylate, trimethylolpropane formal (meth)acrylate, tetrahydrofurfuryl (meth)acrylate, cyclohexyl (meth)acrylate, 3,3,5-trimethylcyclohexyl acrylate, 4-tert-butylcyclohexyl (meth)acrylate, isobornyl (meth)acrylate, norbornyl (meth)acrylate, dicyclopentanyl (meth)acrylate, isoamyl (meth)acrylate, isononyl (meth)acrylate, n-octyl (meth)acrylate, isooctyl (meth)acrylate, lauryl (meth)acrylate, isodecyl (meth)acrylate, tridecyl (meth)acrylate, stearyl (meth)acrylate, caprolactone (meth)acrylate, 2-hydroxy-3-phenoxypropyl (meth)acrylate, 1, 4-cyclohexanedimethanol (meth)acrylate, 2-hydroxyethyl (meth)acrylate, 2-hydroxypropyl (meth)acrylate, 4-hydroxybutyl (meth)acrylate, (meth)acryloylmorpholine, 2- (diethylamino) ethyl (meth)acrylate, 2-(diisopropylamino) ethyl (meth)acrylate, tert-butylaminoethyl (meth)acrylate, morpholinoethyl (meth)acrylate, 2-(diethylamino) ethyl (meth)acrylate, and N-(meth)acryloyloxyethyl hexahydrophthalimide.

Another example of the monofunctional (meth)acrylate monomer is a compound where in a polyfunctional acrylate monomer (for example, the difunctional acrylate monomers and trifunctional or higher acrylate monomers listed above), only one polymerizable group is left untouched, and a primary or secondary organic amine is added (Michael addition) to the remaining polymerizable groups.

<<Trifunctional or higher (meth)acrylate compound>>

The inkjet ink according to the present embodiment may include a trifunctional or higher (meth)acrylate compound (excluding polymerizable compounds having a siloxane bond). When the inkjet ink according to the present embodiment includes the trifunctional or higher (meth)acrylate compound, the curability of the inkjet ink improves. However, in this case, the content of the trifunctional or higher (meth)acrylate compound (excluding polymerizable compounds having a siloxane bond) of the total amount of the inkjet ink is preferably 25% by mass or less, more preferably within a range from 2% to 20% by mass, and particularly preferably from 2% to 15% by mass. By keeping the content of the trifunctional or higher (meth)acrylate compound within the above ranges, shrinkage during curing can be controlled while curability is improved, and good adhesion can be developed. The discharge stability of the inkjet ink is also improved.

Note that the content of the trifunctional or higher (meth)acrylate compound (excluding polymerizable compounds having a siloxane bond) included in the inkjet ink according to the present embodiment may be 0% by mass of the total amount of the inkjet ink. Here, "0% by mass" means that a target compound is substantially not included.

Specific examples of the trifunctional or higher (meth)acrylate compound include, in addition to the trifunctional or higher acrylate monomers listed above, compounds where a polymerizable group is replaced with a methacryloyl group in the trifunctional or higher acrylate monomers (for example, trimethylolpropane trimethacrylate, trimethylolethane trimethacrylate, and the like).

Note that when the inkjet ink according to the present embodiment includes a trifunctional or higher acrylate monomer, the trifunctional or higher acrylate monomer is included in both the "difunctional or higher acrylate compound" and the "trifunctional or higher (meth)acrylate compound".

<<Other polymerizable compound>>

The inkjet ink according to the present embodiment may include a polymerizable compound (also referred to as "other polymerizable compound" in the present disclosure) other than the polymerizable compounds mentioned above. Note that for the other polymerizable compound, only one may be used, or multiple polymerizable compounds may be used in combination.

Specific examples of the other polymerizable compound include a compound obtained by replacing a polymerizable group with a methacryloyl group in the difunctional acrylate monomers listed above (for example, 1,3-propanediol dimethacrylate, 1,4-butanediol dimethacrylate, and the like). As the other polymerizable compound, a compound having one (meth)acryloyl group and one vinyl ether group can be used. Specific examples of the compound include 2-(2-vinyloxyethoxy) ethyl (meth)acrylate and 2-[2-(2-vinyloxyethoxy) ethoxy] (meth)acrylate.

Another example of the other polymerizable compound is a compound having one vinyl group (excluding 5-methyl-3-vinyloxazolidine-2-one). Specific examples include N-vinylcaprolactam and N-vinylpyrrolidone.

When the inkjet ink according to the present embodiment includes a compound having one or more vinyl groups (excluding 5-methyl-3-vinyloxazolidine-2-one) as the other polymerizable compound, the sum of the content of the 5-methyl-3-vinyloxazolidine-2-one and the content of the compound having one vinyl group is preferably within a range from 3% to 45% by mass, more preferably from 3% to 35% by mass, and particularly preferably from 3% to 30% by mass, of the total amount of the inkjet ink according to the present embodiment. By keeping the total amount within the above ranges, a polymerization reaction of the difunctional or higher acrylate compound is promoted, and curability and adhesion improve. Further, with the improvement in the curability, print quality also improves.

<Siloxane-based surface additive having an HLB value of 1.3 to 13.0>

The inkjet ink according to the present embodiment includes a siloxane-based surface additive having an HLB value of 1.3 to 13.0. The use of the siloxane-based surface additive having the HLB value of 1.3 to 13.0 improves wet-spreadability on a printing substrate and improves print quality. In addition, the use of the siloxane-based surface additive having the HLB value of 1.3 to 13.0 in combination with 5-methyl-3-vinyloxazolidine-2-one facilitates improvement of substrate adhesion and discharge stability. Furthermore, due to less sensivity to oxygen inhibition by air included in pores, a high curing rate can be developed, and adhesion to the printing substrate having pores, such as standard coated paper, can be improved. The HLB value is preferably within a range from 1.3 to 13.0, more preferably from 1.6 to 11, and particularly preferably from 2 to 9.

When the inkjet ink according to the present embodiment includes alkanediol diacrylate as the difunctional or higher acrylate compound, the difference between a weighted average value (weighted average HLB value) of the HLB value of the 5-methyl-3-vinyloxazolidine-2-one and the HLB of the alkanediol diacrylate, and the (weighted average) HLB value of the siloxane-based surface additive is preferably within a range from 0 to 3.5, and particularly preferably from 0 to 3.0. When the value of the difference is within the above ranges, all of the 5-methyl-3-vinyloxazolidine-2-one, the alkanediol diacrylate, and the siloxane-based surface additive are considered to be compatible with each other. Consequently, it becomes easy to obtain an inkjet ink excellent in discharge stability, adhesion, and print quality for a printed matter.

Note that the expression "(weighted average) HLB value" refers to the HLB value of the compound when a target compound is one type and the weighted average HLB value of the two or more compounds when a target compound includes two or more types. The "weighted average HLB value" is a value obtained by calculating, for each of target compounds, a multiplication value of the HLB value of the compound, and the mass ratio of the compound to the total amount of the target compounds, and then adding the multiplication values.

"HLB (Hydrophilic-Lipophilic Balance) value" in the present disclosure is one parameter representing the degree of hydrophilicity and the degree of hydrophobicity of a material. The smaller the HLB value, the higher the hydrophobicity of the material, and the larger the HLB value, the higher the hydrophilicity of the material. Methods of determining the HLB value include calculation from a molecular structure and experimental measurement. In the present disclosure, a value (measured HLB value) calculated through measurement according to the following method is used as the HLB value of the siloxane-based surface additive.

[Method of measuring and calculating HLB value of siloxane-based surface additive]

(1) Dissolve 0.5 g of a target surfactant in 5 mL of ethanol.
(2) At a temperature of 25°C, while stirring the mixture (1), titrate with a 2% phenol aqueous solution. The end point is reached when the solution becomes permanently turbid as the 2% phenol aqueous solution is added dropwise.
(3) Calculate the measured HLB value according to equation 1 below, where A [mL] is the amount of 2% phenol aqueous solution added dropwise until the end point. Note that if the mixture is turbid at the time of (1), it is assumed that the HLB value is 1.1 or less.

$$\text{Equation 1:} \quad \text{Measured HLB value} = 0.89 \times A + 1.11$$

Meanwhile, the Griffin method is used to calculate the HLB value of a polymerizable compound. The Griffin method is a method to calculate the HLB value by using the following equation: (HLB value) = 20 × (sum of formula weights of hydrophilic moieties in a target compound) ÷ (molecular weight of the target compound).

The content of the siloxane-based surface additive having the HLB value of 1.3 to 13.0 is preferably within a range from 1% to 5% by mass, more preferably from 1% to 4.5% by mass, and particularly preferably from 1.5% to 4% by mass, of the total amount of the inkjet ink according to the present embodiment. By adjusting the content to 1% to 5% by mass, both discharge stability and print quality can be achieved at a high level. In addition, even when printing is performed on a printing substrate having pores, due to less sensivity to oxygen inhibition by air included in pores, curability and adhesion to the printing substrate having pores can be easily improved.

As described above, in the inkjet ink according to the present embodiment, discharge stability and adhesion are improved by compatibility of the siloxane-based surface additive having the HLB value of 1.3 to 13.0 with the 5-methyl-3-vinyloxazolidine-2-one. From this point of view, that is, the compatibility of the two to improve the curability, the discharge stability, and the adhesion, the content mass of the siloxane-based surface additive having the HLB value of 1.3 to 13.0 when the content mass of the 5-methyl-3-vinyloxazolidine-2-one is 1 is preferably within a range from 0.050 to 1.0, and particularly preferably from 0.10 to 0.40.

As the siloxane-based surface additive having the HLB value of 1.3 to 13.0, for example, a compound having a dimethylsiloxane structure, and a modified product thereof can be used. Among these, a polyether-modified siloxane-based surface additive is particularly preferably used. It is also preferable to use a siloxane-based surface additive having a (meth)acryloyl group per molecule ((meth)acrylic-modified siloxane-based surface additive) from the viewpoint of improving curability and adhesion. It is particularly preferable to use a (meth)acrylic-polyether-modified siloxane-based surface additive having a polyether chain and a (meth)acryloyl group per molecule.

Examples of commercially available products of the siloxane-based surface additive having the HLB value of 1.3 to 13.0 preferably used include TEGO (registered trademark) Wet 240, 250, 260, 270, 280, TEGO Glide 100, 432, 450, TEGO Twin 4000, 4100, 4200, TEGO Rad 2100, 2200N, 2250, 2300, 2330, and 2500, and BYK (registered trademark)-345, 347, 349, 377, 3451, 3455, UV3500, UV3510, and UV3530 manufactured by Evonik Industries AG. Among these, siloxane-based surface additives having an HLB value of 2 to 9 are TEGO Wet 270, 280, TEGO Glide 100, 432, TEGO Twin 4000, 4100, 4200, TEGO Rad 2100, 2330, BYK-347, 377, 3455, UV3510, and UV3530. In the above specific examples, siloxane-based surface additives including a (meth)acryloyl group is TEGO Rad 2100, 2200N, 2250, 2300, 2330, 2500, BYK-UV3500, and UV3530.

<Other surface additive>

The inkjet ink according to the present embodiment may include a surface additive other than the siloxane-based surface additive having the HLB value of 1.3 to 13.0 (also referred to as "other surface additive" in the present disclosure). Examples of the other surface additive used include a siloxane-based surface additive having an HLB value of less than 1.3, or more than 13.0, a fluorine-based surface additive, an acetylene glycol-based surface additive, and an acetylene monool-based surface additive. These surface additives may be used singly or in combination of two or more types thereof.

<Photopolymerization initiator>

The inkjet ink according to the present embodiment preferably includes a photopolymerization initiator. The photopolymerization initiator is a compound that serves as a starting point for a polymerization reaction and a crosslinking reaction of a polymerizable compound. That is, the photopolymerization initiator absorbs energy of an active energy ray, cleaves within molecules, or excites and further abstracts a hydrogen atom from a hydrogen donor to generate a radical. Note that the term "polymerizable initiator" in the present disclosure includes a compound that can function as the hydrogen donor, which is generally referred to as a sensitizer.

Any one or more conventionally known compounds may be used as the photopolymerization initiator. Specific usable examples include acylphosphine oxide-based compounds, benzophenone-based compounds, indane-based compounds, thioxanthone-based compounds, hydroxyacetophenone-based compounds, alkylaminoacetophenone-based compounds, oxime ester-based compounds, aminobenzoate-based compounds, ketocoumarin-based compounds, and anthracene-based compounds. Note that among these, aminobenzoate-based compounds, ketocoumarin-based compounds, and anthracene-based compounds are generally classified as sensitizers.

Among these photopolymerization initiators, it is preferable to use one or more photopolymerization initiators selected from the group consisting of an acylphosphine oxide-based compound and a thioxanthone-based compound, and it is particularly preferable to use at least an acylphosphine oxide-based compound, because an inkjet ink excellent in curability and adhesion can be obtained even when a light source having a narrow wavelength range of active energy rays irradiated, such as an LED light source, is used.

<Acylphosphine oxide-based compound>

Specific examples of the acylphosphine oxide-based compound include diphenyl (2,4,6-trimethylbenzoyl) phosphine oxide, ethoxyphenyl (2,4,6-trimethylbenzoyl) phosphine oxide, phenylbis (2,4,6-trimethylbenzoyl) phosphine oxide, and multimers of these compounds. Examples of commercially available products of the acylphosphine oxide-based compound include "Omnirad TPO", "Omnirad TPO-L", "Omnirad TPO-H", "Omnirad 819", and "OMNIPOL TP" manufactured by IGM RESINS B.V., and "Speedcure TPO", "Speedcure TPO-L", and "Speedcure BPO" manufactured by Lambson. In addition, acylphosphine oxide-based compounds described in WO 2017/086224 A and WO 2020/049378 A and lithium phenyl (2,4,6-trimethylbenzoyl) phosphinate can also be used.

In the inkjet ink of the present embodiment, the acylphosphine oxide-based compounds listed above may be used singly or in combination of two or more types thereof.

Among these compounds, ethoxyphenyl (2,4,6-trimethylbenzoyl) phosphine oxide and/or a multimer of ethoxyphenyl (2,4,6-trimethylbenzoyl) phosphine oxide can be preferably used from the viewpoint of high affinity with 5-methyl-3-vinyloxazolidin-2-one and improvement in curability and discharge stability.

When the inkjet ink according to the present embodiment includes an acylphosphine oxide-based compound, from the viewpoint of obtaining an inkjet ink excellent in all of curability, adhesion, discharge stability, and print quality, the amount thereof is preferably within a range from 4% to 15% by mass, and particularly preferably from 5% to 12% by mass, of the total amount of the inkjet ink. In addition, from the viewpoint of obtaining an inkjet ink excellent in curability, adhesion, and discharge stability, the content mass of the acylphosphine oxide-based compound is preferably within a range from 0.4 to 4.0, and particularly preferably from 0.5 to 2.5, where the content mass of the 5-methyl-3-vinyloxazolidine-2-one is 1.

Furthermore, from the viewpoint of improving curability and adhesion without deteriorating discharge stability and print quality, the sum of the content of the ethoxyphenyl (2,4,6-trimethylbenzoyl) phosphine oxide, and the content of a multimer of the ethoxyphenyl (2,4,6-trimethylbenzoyl) phosphine oxide, relative to the total amount of the photopolymerization initiator included in the inkjet ink according to the present embodiment is preferably within a range from 45% to 80% by mass, more preferably from 50% to 80% by mass, and particularly preferably from 50% to 70% by mass.

The sum of the content mass of the ethoxyphenyl (2,4,6-trimethylbenzoyl) phosphine oxide, and the multimer of the ethoxyphenyl (2,4,6-trimethylbenzoyl) phosphine oxide is preferably within a range from 0.33 to 2.0, and particularly preferably from 0.37 to 1.6, where the content mass of the 5-methyl-3-vinyloxazolidine-2-one is 1. By keeping the sum of the content mass within the above-described ranges, affinity and compatibility of the compounds mentioned above are improved, and it becomes easy to obtain an inkjet ink excellent in curability, adhesion, and discharge stability.

<<Thioxanthone-based compound>>

Specific examples of the thioxanthone-based compound include 2-isopropylthioxanthone, 4-isopropylthioxanthone, 2,4-diethylthioxanthone, 3-methoxythioxanthone, 2-carboxymethoxythioxanthone, 3-ethoxycarbonylmethoxythioxanthone, 3-butoxycarboxymethoxythioxanthone, 1,3-dimethyl-2-(2-ethylhexyloxy) thioxanthone, 2-[2,2-bis(ethoxycarbonyl)] ethylthioxanthone, 1-chloro-4-propoxythioxanthone, and multimers of these compounds. Examples of commercially available products of the thioxanthone-based compound include "Omnirad ITX", "Omnirad DETX", "OMNIPOL TX", "OMNIPOL 3TX", and "OMNIPOL BL 728" manufactured by IGM RESINS B.V., "SPEEDCURE ITX", "SPEEDCURE 2-ITX", "SPEEDCURE DETX", "SPEEDCURE LTX", "SPEEDCURE CPTX", and "SPEEDCURE 7010" manufactured by Lambson, and "Genopol TX-2" manufactured by RAHN AG. Note that among these commercially available products, "OMNIPOL TX", "SPEEDCURE 7010", and "Genopol TX-2" are multimers described above. In the inkjet ink according to the present embodiment, the thioxanthone-based compounds listed above may be used singly or in combination of two or more types thereof.

When the inkjet ink according to the present embodiment includes a thioxanthone-based compound, from the viewpoint of obtaining an inkjet ink excellent in all of curability, adhesion, discharge stability, and print quality, the amount thereof is preferably within a range from 0.5% to 8% by mass, and particularly preferably from 1% to 5% by mass, of the total amount of the inkjet ink.

In an embodiment, in the inkjet ink according to the present embodiment, it is preferable to use an acylphosphine oxide-based compound in combination with a thioxanthone-based compound. In this case, from the viewpoint of obtaining both excellent curability and fineness of printed matter, the content mass of the acylphosphine oxide-based compound is preferably within a range from 1 to 25, and particularly preferably from 2 to 12, of the total amount of the inkjet ink, where the content mass of the thioxanthone-based compound is 1.

Further, from the viewpoint of also improving discharge stability in addition to the curability and the fineness of printed matter, the content mass of the acylphosphine oxide-based compound of the total amount of the inkjet ink is preferably within a range from 0.3 to 4, and particularly preferably from 0.4 to 1.5, where the sum of the content mass of the thioxanthone-based compound and the content mass of the 5-methyl-3-vinyloxazolidine-2-one of the total amount of the inkjet ink is 1.

<<Other photopolymerization initiator>>

Examples of commercially available products of the photopolymerization initiator other than the acylphosphine oxide-based compound and the thioxanthone compound (also referred to as "other photopolymerization initiator" in the present disclosure) are listed below.

Examples of commercially available products of the benzophenone-based compound include "Omnirad BP", "Omnirad BMS", "Omnirad 4 PBZ", "OMNIRAD EMK", and "Esacure 1001M" manufactured by IGM RESINS B.V.

Examples of commercially available products of the indane-based compound include "SpeedCure XFs01" manufactured by Lambson.

Examples of commercially available products of the hydroxyacetophenone-based compound include "Omnirad 127", "Omnirad 184", "Omnirad 1173", "Omnirad 2959", and "Esacure KIP 150" manufactured by IGM RESINS B.V.

Examples of commercial products of alkylaminoacetophenone-based compounds include "Omnirad 907", "Omnirad 369", and "Omnirad 379" manufactured by IGM RESINS B.V.

Examples of commercial products of oxime ester-based compounds include "IRGACURE OXE01", "IRGACURE OXE02", and "IRGACURE OXE04" manufactured by BASF.

Examples of commercially available products of the aminobenzoate-based compound include "Omnirad EDB", "Omnirad EHA", "Esacure A198", and "Omnipol ASA" manufactured by IGM RESINS B.V., "SPEEDCURE EDB", "SPEEDCURE EHA", "SPEEDCURE BEDB", and "SPEEDCURE 7040" manufactured by Lambson, and "GENOPOL AB-1" and "GENOPOL AB-2" manufactured by Rahn AG.

An example of commercially available products of the ketocoumarin-based compound is "Esacure 3644" manufactured by IGM RESINS B.V. Ketocoumarin-based compounds disclosed in JP-T 2015-531753 A, JP-T 2019-527199 A, JP-T 2021-509696 A, and the like may also be used.

An example of commercially available products of the anthracene-based compound is "ANTHRACURE UVS-581" manufactured by Kawasaki Kasei Chemicals Ltd.

In addition to those listed above, for example, "Omnirad 651" and "Omnirad MBF" manufactured by IGM RESINS B.V. can be used as the photopolymerization initiator.

In the inkjet ink according to the present embodiment, the commercial products listed above may be used singly or in combination of two or more types thereof as the other photopolymerization initiator.

When the inkjet ink according to the present embodiment includes a photopolymerization initiator, the total amount of the photopolymerization initiator is preferably within in a range from 3% to 20% by mass, more preferably from 4% to 17% by mass, and particularly preferably from 5% to 15% by mass, relative to the total amount of the inkjet ink. By keeping the total amount of the photopolymerization initiator within the above ranges, all of curability, adhesion, and discharge stability can be achieved.

<<Colorant>>

When the inkjet ink according to the present embodiment includes a colorant, conventionally known dyes and pigments can be used as the colorant. Particularly, it is preferable to use a pigment from the viewpoint of improving color developability (opacifying property for white ink and glittering property for metallic ink) of printed matter, storage stability and discharge stability. Specific examples of organic pigments and inorganic pigments that can be used as the above-mentioned pigment include:

red pigments such as C. I. Pigment Red 5, 7, 12, 17, 48(Ca), 48(Mn), 49:2, 57(Ca); 57:1, 112, 122, 123, 147, 149, 150, 166, 168, 176, 177, 178, 179, 184, 188, 202, 209, 242, 254, 255, 264, 266, 269, and 282; orange pigments such as C. I. Pigment Orange 5, 13, 34, 38, 43, 61, 62, and 64; yellow pigments such as C. I. Pigment Yellow 1, 2, 3, 12, 14, 16, 17, 73, 74, 75, 83, 93, 95, 97, 98, 109, 110, 114, 120, 128, 129, 138, 139, 147, 150, 151, 154, 155, 180, 185, and 213; green pigments such as C. I. Pigment Green 7, 26, 36, 50, and 58; blue pigments such as C. I. Pigment Blue 1, 2, 3, 15, 15:3, 15:4, 15:6, 16, 22, and 60; violet pigments such as C. I. Pigment Violet 19, 23, 31, and 37; black pigments such as C. I. Pigment Black 1, 6, 7, and 32; white pigments such as C. I. Pigment White 4, 5, 6, 12, 18, 21, and 25; and metallic pigments such as C. I. Pigment Metal 1, 2, and the like.

Note that the pigments listed above may be used singly or in combination of two or more types thereof.

When the inkjet ink according to the present embodiment includes a pigment, the content thereof can be adjusted according to the color of the inkjet ink and the purpose of use. For example, from the viewpoint achieving all of storage stability, discharge stability, and curability of the inkjet ink, the content of the pigment is preferably within a range from 0.5% to 15% by mass, and particularly preferably from 1% to 10% by mass, excluding a case of a white ink and a case of a metallic ink. In contrast, when the inkjet ink according to the present embodiment is a white ink, from the viewpoint of achieving all of storage stability, discharge stability, and curability of the inkjet ink, and opacifying property of ink-cured films, the content of the pigment is more preferably within a range from 5% to 30% by mass, and even more preferably from 15% to 25% by mass. When the inkjet ink is a metallic ink, from the viewpoint of achieving storage stability and discharge stability of the inkjet ink, and glittering property of ink-cured films, the content of the pigment is more preferably within a range from 0.5% to 10% by mass, and even more preferably from 1% to 5% by mass.

<<Pigment derivative>>

When the inkjet ink according to the present embodiment includes a pigment, a pigment derivative can be used to ensure and improve dispersion stability of the pigment, and storage stability and discharge stability of the inkjet ink.

As the pigment derivative, a compound where a substituent is introduced into a basic skeleton of the pigment can be used. In particular, it is preferable to use a compound where a substituent is introduced into the same basic skeleton as that of the pigment included in the inkjet ink. For example, when C. I. pigment blue 15:3 is used as the pigment, a compound where a substituent is introduced into a copper phthalocyanine skeleton is preferably used, and when C. I. pigment red 122 is used as the pigment, a compound where a substituent is introduced into a quinacridone skeleton is preferably used.

In contrast, examples of the substituent include a carboxylate group ($COO^-$) having a counter ion, and a sulfonate group ($SO_3^-$) having a counter ion. Examples of the counter ion include a hydrogen ion ($H^+$), a sodium ion, a potassium ion, a magnesium ion, a calcium ion, a primary amine cation, a secondary amine cation, a tertiary amine cation, and a quaternary ammonium cation.

When the inkjet ink according to the present embodiment includes a pigment derivative, the substituent is preferably a sulfonate group having a counter ion selected from the group consisting of a hydrogen ion, a primary amine cation, a secondary amine cation, and a quaternary ammonium cation. By using a pigment derivative having such a substituent, it becomes easy to obtain an inkjet ink excellent in storage stability and discharge stability.

When the inkjet ink according to the present embodiment includes a pigment and a pigment derivative, the amount of the pigment derivative is preferably within a range from 0.5% to 10% by mass, and particularly preferably from 1% to 8% by mass, relative to the content of the pigment, although it varies depending on the type of the pigment used in combination.

<<Pigment dispersing resin>>

When the inkjet ink according to the present embodiment includes a pigment, a pigment dispersing resin can be used in order to ensure and improve dispersion stability of the pigment, and storage stability and discharge stability of the inkjet ink.

The mass average molecular weight of the pigment dispersing resin is preferably within a range from 3,500 to 60,000, more preferably from 5,000 to 50,000, and even more preferably from 10,000 to 45,000. Within the above ranges, compatibility of the pigment dispersing resin with a polymerizable monomer mentioned above becomes favorable, and storage stability and discharge stability of the ink are improved. In addition, the pigment is uniformly dispersed by the pigment dispersing resin, and adhesion is also improved.

The mass average molecular weight can be obtained using gel permission chromatography (GPC). Specifically, the mass average molecular weight is a value obtained as a polystyrene-equivalent molecular weight measured using DMF as a developing solvent in GPC (for example, "HLC-8320GPC" manufactured by Tosoh Corporation) equipped with an RI detector using a TSKgel column (manufactured by Tosoh Corporation).

The pigment dispersing resin is preferably a basic pigment dispersing resin from the viewpoint of suitably improving dispersion stability of the pigment, and storage stability and discharge stability of the inkjet ink.

The term "basic pigment dispersing resin" in the present disclosure refers to a dispersing resin where a basic group serves as an adsorption point on a surface of a pigment. Examples of the basic group include a primary amino group, a secondary amino group, a tertiary amino group, a quaternary ammonium group, and an imino group. Organic groups bonded to nitrogen atoms in the tertiary amino group and the quaternary ammonium group may be bonded to each other to form a ring (heterocyclic ring containing the nitrogen atom) structure. Examples of the ring include pyridine, pyrrolidine, pyrrolidone, imidazoline, and caprolactam.

Examples of the basic pigment dispersing resin include an acrylic resin having the basic group, an (anhydrous) maleic acid resin having the basic group, polyethyleneimine, polyallylamine, polydiallylamine, polyvinylimidazoline, polyvinylpyrrolidone, and a graft resin having these resins as a main chain. Examples of commercially available products of the basic pigment dispersing resin include "AJISPER-PB-821", "AJISPER-PB-822", "ADISPER-PB-824", and "ADISPER-PB-881" manufactured by Ajinomoto Fine-Techno Co., Inc., "DISPERBYK-162", "DISPERBYK-163", "DISPERBYK-168", "DISPERBYK-182", "DISPERBYK-184", "DISPERBYK-185", "DISPERBYK-2013", "DISPERBYK-2155", "BYKJET-9150", "BYKJET-9151", and "BYKJET-9l52" manufactured by BYK Japan KK, "Solsperse 24000", "Solsperse 32000", "Solsperse 33000", "Solsperse 35000", "Solsperse 39000", "Solsperse 86000", "Solsperse J200", and "Solsperse X300" manufactured by Lubrizol Corporation, and "EFKA PX4701", "EFKA PX 4703", and "EFKA PX4733" manufactured by BASF.

Note that in the present disclosure, the term "acrylic resin" represents a resin using one or more selected from the group consisting of an acrylic acid, a methacrylic acid, an acrylic ester, and a methacrylic ester, as a monomer configuring a resin (a styrene-based monomer may further be used). However, a resin using an (anhydrous) maleic acid (maleic anhydride and/or maleic acid) as the monomer is not included in the "acrylic resin".

In the present disclosure, the term "(anhydrous) maleic acid resin" refers to a resin using at least an (anhydrous) maleic acid as a monomer configuring the resin. The (anhydrous) maleic acid resin may further use, as the monomer, one or more selected from the group consisting of an $\alpha$-olefin, an acrylic acid, a methacrylic acid, an acrylic ester, a methacrylic ester, styrene, and a styrene derivative.

When the inkjet ink according to the present embodiment includes a basic pigment dispersing resin, an amine value is preferably within a range from 10 to 50 mgKOH/g, and particularly preferably from 15 to 40 mgKOH/g. The basic pigment dispersing resin having an amine value within the above ranges has a sufficient amount of adsorption points, and thus can strongly adsorb a pigment. Consequently, dispersion stability of the pigment, and storage stability and discharge stability of the inkjet ink are improved. Since the adsorption point (basic group) does not inhibit a polymerization reaction and the like of a polymerizable compound, curability and adhesion of the inkjet ink are also improved.

The "amine value" is the number of mg of potassium hydroxide equivalent to an acid required to neutralize 1 g of the resin. As an example of a method of actually measuring the amine value, a target resin is dissolved in a solvent obtained by mixing ethanol or tetrahydrofuran, and an acetic acid, and then titration is performed using a potentiometric titration method with a 0.1 mol/L perchloric acid-acetic acid solution. Then, by conversion into the number of mg of potassium hydroxide using a titration amount read from an obtained titration curve, the amine value can be calculated.

When the inkjet ink according to the present embodiment includes a basic pigment dispersing resin, the acid value is preferably within a range from 2 to 30 mgKOH/g, and particularly preferably from 5 to 20 mgKOH/g. When the acid value of the basic pigment dispersing resin is within the above ranges, adsorption of a basic group to the pigment surface is not easily inhibited, and the pigment dispersed by the basic dispersing resin is uniformly and stably dispersed in the inkjet ink, thereby improving dispersion stability of the pigment, and storage stability, discharge stability, and adhesion of the inkjet ink.

The "acid value" is the number of mg of potassium hydroxide required to neutralize 1 g of the resin, and can be determined using a potentiometric titration method in accordance with JIS K 0070. As an example of a specific measurement method, a target resin is dissolved in a solvent obtained by mixing diethyl ether and ethanol at a mass ratio of 1:1, and then titration is performed using a potentiometric titration method with a 0.1 mol/L potassium hydroxide-ethanol solution. Then, an acid value can be calculated using a titration amount read from an obtained titration curve.

When the inkjet ink according to the present embodiment includes a basic pigment dispersing resin, the content thereof is preferably within a range from 15% to 120% by mass, and more preferably from 20% to 80% by mass, relative to the total amount of the pigment, excluding a case where the inkjet ink is a white ink. In the case of a white ink, the content thereof is preferably within a range from 2% to 60% by mass, and more preferably from 5% to 30% by mass, relative to the total amount of the pigment. By using the inkjet ink in the ranges of the amount, initial dispersibility of the pigment, storage stability and adhesion of the inkjet ink are improved.

<<Polymerization inhibitor>>

In order to improve discharge stability of the inkjet ink, and improve hue stability and prevent curing wrinkles in a printed matter, a polymerization inhibitor can be blended into the inkjet ink according to the present embodiment. Specific examples of the polymerization inhibitor include a hindered phenol-based compound, a phenol-based compound, a hydroquinone-based compound, a phenothiazine-based compound, a phosphorus-based compound, and a nitrosophenylhydroxylamine-based compound, and these compounds can be suitably used.

More specific examples of the polymerization inhibitor usable in the inkjet ink according to the present embodiment include 4-methoxyphenol, tert-butylhydroquinone, 2,6-di-tert-butyl-4-methylphenol, pentaerythritol tetrakis [3-(3,5-di-tert-butyl-4-hydroxyphenyl) propionate], hydroquinone, methylhydroquinone, phenothiazine, dicumylphenothiazine, triphenylphosphine, and an aluminum salt of N-nitrosophenylhydroxylamine.

The content of the polymerization inhibitor is preferably within a range from 0.01% to 2% by mass, more preferably from 0.05% to 1% by mass, and particularly preferably from 0.1% to 0.8% by mass, based on the total weight of the inkjet ink. When the content is adjusted to the above ranges, it becomes easy to improve discharge stability of the inkjet ink while maintaining curability.

<<Organic solvent and water>>

In the inkjet ink according to the present embodiment, an organic solvent and/or water may be used for reducing viscosity of the inkjet ink, improving wet-spreadability and adhesion to a printing substrate, and ensuring discharge stability. When the organic solvent and/or water is included, the total content is preferably within a range from 0.01% to 10% by mass, more preferably from 0.05% to 5% by mass, and particularly preferably from 0.1% to 3% by mass, based on the total mass of the inkjet ink. In addition, when an organic solvent is used, it is preferable to use an organic solvent having a boiling point of 140°C to 300°C from the viewpoint of discharge stability, and wet-spreadability and adhesion to a printing substrate.

As the organic solvent, for example, alkylene glycol monoalkyl ether acetates, alkylene glycol diacetates, alkylene glycol monoalkyl ethers, alkylene glycol dialkyl ethers, alkanediols, lactams, lactones, other nitrogen-containing solvents, and other oxygen-containing solvents can be used.

Among these, it is preferable to include at least one selected from the group consisting of an alkylene glycol monoalkyl ether, an alkylene glycol dialkyl ether, and an alkylene glycol monoalkyl ether acetate. In particular, tripropylene glycol monomethyl ether, dipropylene glycol monomethyl ether, propylene glycol monomethyl ether, ethylene glycol monobutyl ether, diethylene glycol monobutyl ether, triethylene glycol monobutyl ether, ethylene glycol monobutyl ether acetate, diethylene glycol methylethyl ether, and diethylene glycol diethyl ether are preferable. In an embodiment, the organic solvent preferably includes at least one selected from the group consisting of dipropylene glycol monomethyl ether, diethylene glycol monobutyl ether, ethylene glycol monobutyl ether acetate, diethylene glycol methylethyl ether, and diethylene glycol diethyl ether. The use of these organic solvents facilitates improvement of adhesion and print quality while maintaining storage stability and discharge stability of the inkjet ink in a suitable state.

<<Inert resin>>

The inkjet ink according to the present embodiment may include an inert resin to improve adhesion to various printing substrates, and to adjust viscoelasticity of the inkjet ink for improved discharge stability. As the inert resin, a (meth) acrylic resin, a urethane resin, a vinyl chloride-vinyl acetate copolymer resin, a ketone resin, and the like can be used. Among these, the inert resin preferably includes a (meth)acrylic resin and/or a ketone resin from the viewpoint of improving both adhesion and discharge stability.

When the inkjet ink according to the present embodiment includes an inert resin, the content is preferably within a range from 0.1% to 10% by mass, more preferably from 0.5% to 5% by mass, and particularly preferably from 1% to 3% by mass, based on the total mass of the inkjet ink. When the content is adjusted within the above ranges, adhesion and discharge stability can be easily improved without deteriorating curability.

In the present disclosure, the term "inert resin" refers to a resin that is not involved in a polymerization reaction and contributes to adhesion to a printing substrate, and that has solubility in the inkjet ink.

<<Other additive>>

The inkjet ink according to the present embodiment may further include an additive, such as an ultraviolet absorber or a discoloration inhibitor, in addition to the above-described components as necessary. Any one or more conventionally known compounds for these components may be used.

<Physical properties of inkjet ink>

The inkjet ink according to the present embodiment preferably has a viscosity of 5 to 25 mPa·s at 25°C, and more preferably 7 to 20 mPa·s, from the viewpoint of improving discharge stability and print quality. When the viscosity is 5 mPa·s or more, the inkjet ink can be favorably discharged from an inkjet head. When the viscosity is 25 mPa·s or less, discharge can be stably continued without deteriorating discharge accuracy. The viscosity is particularly preferably within a range from 8 to 14 mPa·s from the viewpoint that high frequency suitability can be imparted, and stable discharge can be achieved even in high-speed printing. The viscosity can be measured using 1.1 mL of the inkjet ink and an E-type viscometer equipped with a cone (diameter: 48 mm) having a cone angle of 1°34' (for example, "TVE25L" manufactured by Toki Sangyo Co., Ltd.) under an environment of 25°C and under a rotational speed condition of 20 rpm.

A static surface tension of the inkjet ink at 25°C is preferably within a range from 20 to 45 mN/m, and particularly preferably from 22 to 40 mN/m, from the viewpoint of improving all of discharge stability, print quality, and curability. As the static surface tension, a value measured by a plate method (Wilhelmi method) is used. Specifically, measurement can be performed under an environment of 25°C using, for example, an automatic surface tensiometer "CBVP-Z" manufactured by Kyowa Interface Science Co., Ltd. and a platinum plate.

<Method of manufacturing inkjet ink>

The inkjet ink according to the present embodiment can be manufactured using a conventionally known method, for example, as follows. However, the method of manufacturing the inkjet ink according to the present embodiment is not limited to the method described below.

First, a pigment dispersing resin is dissolved in a polymerizable compound in advance to manufacture a pigment dispersing resin varnish. Next, a pigment is added little by little to the pigment dispersing resin varnish being stirred, and mixed. After mixing (premixing) for a certain period of time, a dispersion treatment is performed using a dispersing apparatus such as a paint shaker, sand mill, a roll mill, or a media-less disperser, thereby manufacturing a pigment dispersion. Note that it is preferable to use a difunctional or higher acrylate compound described above as the polymerizable compound to be used for manufacturing the pigment dispersing resin varnish, because dispersion stability of the pigment, and storage stability and discharge stability of the inkjet ink can be easily improved.

Thereafter, to the pigment dispersion, 5-methyl-3-vinyloxazolidine-2-one, a difunctional or higher acrylate compound, a siloxane-based surface additive having an HLB value of 1.3 to 13.0, and, as necessary, another polymerizable compound, a photopolymerization initiator, a surface additive, a polymerization inhibitor, an organic solvent, water, an inert resin, another additive, and the like are added and mixed well. Then, by filtering the mixture through a filter or the like to filter out coarse particles, the inkjet ink according to the present embodiment can be obtained.

When a white pigment is used as the pigment, the amount of the pigment present in the pigment dispersion is preferably within a range from 20% to 70% by mass, and particularly preferably from 25% to 60% by mass, in the pigment dispersion. When a pigment other than a white pigment is used as the pigment, it is preferably within a range from 10% to 40% by mass, and particularly preferably from 15% to 30% by mass, in the pigment dispersion.

<Printed matter>

Printed matter according to an embodiment of the present invention is obtained by printing the above-mentioned inkjet ink according to the present embodiment on a printing substrate described below, that is, a printing substrate on which an image and/or characters are recorded. Accordingly, "printed matter" in the present disclosure includes an image and/or characters formed with a film (ink-cured film) obtained by curing the inkjet ink according to the present embodiment, and a printing substrate. Note that "image" includes a seamless image, such as a solid image and a checkered image. As a method of manufacturing a printed matter, an inkjet printing method described below can be used.

<Inkjet printing method>

The inkjet ink according to the present embodiment described above is preferably used in an inkjet printing method. The inkjet printing method preferably includes, in this order, a step (step I) of discharging the inkjet ink according to the present embodiment from an inkjet head on a printing substrate, and a step (step II) of irradiating the inkjet ink discharged onto the printing substrate with an active energy ray to cure the inkjet ink.

In the inkjet printing method, a method of discharging and applying the same inkjet ink from the same inkjet head to the same place on a printing substrate multiple times, that is, a method of performing the above step I on the same place on the printing substrate multiple times (multi-pass printing method) may be adopted. However, in the case of an inkjet printing method using the inkjet ink according to the present embodiment, a method of discharging and applying the same inkjet ink from the same inkjet head to the same place on a printing substrate only once is preferable from the viewpoint that the effect of the inkjet ink, which is excellent in curability, print quality, and discharge stability, is sufficiently exhibited, and a printed matter excellent in print quality can be obtained at a high speed and stably. That is, it is preferable to adopt a method of performing the step I only once to the same place on the printing substrate (one-pass printing method).

The one-pass printing method can be implemented by using, for example, a line printer. A printing speed (transport speed of a printing substrate) at this time is preferably within a range from 35 to 150 m/min, more preferably from 50 to 125 m/min, and even more preferably from 75 to 100 m/min, from the viewpoint of obtaining a printed matter having productivity and favorable quality.

The inkjet ink according to the present embodiment is an ink for inkjet printing. Thus, as described above, an inkjet head is used as an inkjet ink discharging means in the step I.

Examples of a method of discharging an ink using an inkjet head include an electrostatic induction method where an ink is discharged using electrostatic force, a drop-on-demand method (pressure pulse method) where vibration pressure of a piezo element is used, an acoustic inkjet method where an ink is irradiated with an acoustic beam converted from an electric signal, and the ink is discharged using radiation pressure at this time, and a thermal inkjet method where an ink is heated to form bubbles, and the ink is discharged using generated pressure. Among these, in an embodiment, a drop-on-demand method (pressure pulse method) using vibration pressure of a piezo element can be preferably used from the viewpoint of discharge stability.

A drop volume of droplets of the inkjet ink discharged from an inkjet nozzle is preferably within a range from 1 to 50 pL (picoliter), more preferably from 2 to 30 pL, and even more preferably from 3 to 20 pL, from the viewpoint of print quality and discharge stability. Design resolution of an inkjet head is preferably 300 dpi or higher, more preferably 480 dpi or higher, and even more preferably 600 dpi or higher. Note that dpi represents the number of dots per 2.54 cm (1 inch). Discharge of the inkjet ink from an inkjet head may be performed at a high frequency of 20 kHz or higher.

Examples of an inkjet head satisfying the above conditions include KJ4A-AA, KJ4A-TA, and KJ4A-RH manufactured by Kyocera Corporation, Samba G3L manufactured by FUJIFILM Corporation, S3200, S1600, S800, I3200, and I1600 manufactured by Seiko Epson Corporation, KM1024i and KM1024 manufactured by KONICA MINOLTA Inc., and MH5320, MH5340, MH5240, and MH5440 manufactured by Ricoh Co., Ltd., all of which can be preferably used.

In an embodiment, the inkjet ink can be discharged while being heated by a heating device, such as a heater, provided in an inkjet head, such that the inkjet ink has an appropriate viscosity. From the viewpoint of continuously and stably discharging the inkjet ink, it is preferable to heat the inkjet ink such that its viscosity at the time of discharge is 15 mPa·s or less, and more preferable to heat the inkjet ink such that its viscosity is 12 mPa·s or less.

In contrast, in the step II, the inkjet ink discharged onto the printing substrate is cured by being irradiated with an active energy ray to form an ink-cured film.

The term "active energy ray" in the present disclosure refers to an energy ray capable of providing energy necessary for generating radicals in an object to be irradiated (inkjet ink). Specific examples of the active energy ray include an ultraviolet ray, an electron ray, a visible ray, and an infrared ray, and an ultraviolet ray is preferably selected from the viewpoint that curability of the inkjet ink can be easily improved, and that design flexibility of the inkjet ink and a printing apparatus is high.

Examples of the light source of ultraviolet rays include a high-pressure mercury lamp, a low-pressure mercury lamp, an ultra-high-pressure mercury lamp, a metal halide lamp, an ultraviolet laser, and an LED light source, and only one of these may be used, or two or more thereof may be used in combination. For example, since the LED light source has a small form, it is easy to arrange multiple LED light sources side by side or to use them in combination with a high-pressure mercury lamp or a metal halide lamp, and further improvement in curability can be easily realized. When multiple LED light sources are arranged side by side, multiple LED light sources having different radiation peak wavelengths may be used in combination.

In general, ultraviolet rays emitted from LED light sources have a narrow wavelength width, and are excellent in rectilinearity (i.e., poor in diffusivity), and thus the active energy ray-curable inkjet ink is difficult to cure. However, the inkjet ink according to the present embodiment is particularly excellent in curability and thus can be preferably combined with LED light sources.

In the inkjet printing method using the inkjet ink according to the present embodiment, when ultraviolet rays are selected as active energy rays, and an LED light source is employed as a light source of the ultraviolet rays, a radiation peak wavelength thereof is preferably within a range from 260 to 450 nm, more preferably from 280 to 420 nm, and particularly preferably from 320 to 410 nm.

When an LED light source emitting an ultraviolet ray is used in the step II, the maximum intensity of the ultraviolet rays on a printing substrate is preferably 1,000 mW/cm$^2$ or more from the viewpoint of sufficiently exhibiting the above-described effects and obtaining a printed matter excellent in curability and print quality including fineness of a printed matter. The maximum intensity is more preferably 2,000 mW/cm$^2$ or more, and particularly preferably 3,000 mW/cm$^2$ or more. The integrated light amount at the time of irradiating the printing substrate differs depending on the type and the content of a polymerizable compound and a photopolymerization initiator included in the inkjet ink, but is preferably 50 mJ/cm$^2$ or more, for example. The integrated light amount is more preferably 100 mJ/cm$^2$ or more, and particularly preferably 150 mJ/cm$^2$ or more.

In the step I, after droplets of the inkjet ink are attached to the printing substrate (that is, after the end of the step I), irradiation with an active energy ray is started (that is, step II is started). A time from the end of the step I to the start of the step II is preferably adjusted to a range from 0.03 to 3 seconds. The time is more preferably within a range from 0.04 to 2.5 seconds, and even more preferably from 0.06 to 2 seconds. By adjusting the time to the above ranges, dot formability of the inkjet ink is improved, and a printed matter excellent in print quality can be obtained.

In the inkjet printing method, the step II can be repeated multiple times. For example, immediately after an inkjet ink is applied on a printing substrate, by irradiating the inkjet ink with an active energy ray, the inkjet ink is partially cured, and then by irradiating the inkjet ink with the active energy ray again, the inkjet ink can be completely cured. In this way, it becomes easy to obtain a printed matter particularly excellent in print quality including fineness of a printed matter. In the present disclosure, the step of partially curing the inkjet ink described above is referred to as "pre-curing", and the step of completely curing the inkjet ink is referred to as "main curing".

That is, in an embodiment, the inkjet printing method using the inkjet ink according to the present embodiment may include, in this order, a step (step I) of discharging the inkjet ink from an inkjet head onto a printing substrate, a step (step II-A) of irradiating the inkjet ink discharged onto the printing substrate with an active energy ray and pre-curing the inkjet ink, and a step (step II-B) of main-curing the inkjet ink.

When the step II-A is performed, that is, when the inkjet ink discharged onto the printing substrate is pre-cured, it is preferable to use an LED light source that emits an ultraviolet ray. In this case, the maximum intensity of the ultraviolet ray on the printing substrate in the pre-curing is preferably within a range from 2 to 20 mW/cm$^2$, and more preferably from 5 to 15 mW/cm$^2$, from the viewpoint of particularly improving print quality of a printed matter.

In general, when the step II-A is performed, a time from the time when the discharged inkjet ink impacts on the printing substrate to the time when the ink is pre-cured is extremely short, about 0.03 to 0.5 seconds, but the inkjet ink according to the present embodiment can be suitably combined with the pre-curing because it is particularly excellent in the wet-spreadability.

When the step II-B is performed, that is, when the inkjet ink discharged onto the printing substrate is main-cured, an LED light source that emits an ultraviolet ray can also be used. In this case, the above-described maximum intensity of 1,000 mW/cm$^2$ or more, and integrated light amount of 50 mJ/cm$^2$ or more are preferably used.

In contrast, in the step II-B, an ultraviolet ray can be irradiated using a high-pressure mercury lamp or a metal halide lamp. In this case, the maximum intensity of the ultraviolet ray is preferably 80 mW/cm$^2$ or more, and more preferably 120 mW/cm$^2$ or more. The integrated light amount is preferably 100 mJ/cm$^2$ or more, more preferably 150 mJ/cm$^2$ or more, and even more preferably 200 mJ/cm$^2$ or more.

<Printing substrate>

The printing substrate used in the printing method using the inkjet ink according to the present embodiment is preferably a resin film substrate or a paper substrate. The resin film substrate may preferably have a thickness of 10 to 90 μm. As the resin film substrate, a substrate including a material selected from the group consisting of polypropylene, polyethylene, polyethylene terephthalate, and nylon is preferably selected. Meanwhile, as the paper substrate, standard coated paper, art paper, laminated paper, and the like are preferably selected. As described above, with the inkjet ink according to the present embodiment, it is possible to manufacture a printed matter excellent in curability and adhesion even on a printing substrate having pores, such as standard coated paper.

In an embodiment, the inkjet ink according to the present embodiment is preferably used for printing packages formed with printing substrates listed above. In the printing of packages, it is particularly suitable for printing of a food package.

As described above, the inkjet ink according to the present embodiment exhibits excellent curability and adhesion even when printed on a printing substrate having pores, such as standard coated paper. Specifically, the inkjet ink according to the present embodiment is preferably used for a coated paper substrate having 60° gloss of 15 to 35. Note that as the 60° gloss, a value measured using "micro-TRI-gloss" manufactured by BYK-Gardner GmbH is used.

The "substrate including a material selected from the group consisting of polypropylene, polyethylene, polyethylene terephthalate, and nylon" is not limited to a single layer structure and may have a multilayer structure. That is, the substrate may be, for example, a resin film substrate having one layer made from a material selected from the group consisting of polyethylene terephthalate, polyethylene, polypropylene, and nylon, or may be a resin film substrate (laminated film substrate) having two or more of the layers. For the purpose of improving strength of a package, blocking oxygen, and the like, a layer forming the laminated film substrate may include a layer made from an AL (aluminum foil), a VM (vacuum metallizing) film (aluminum vapor-deposited film or transparent vapor-deposited film), or the like.

Examples

Hereinafter, the present invention will be described in more detail, but the following examples do not limit the scope of rights of the present invention in any way. Unless otherwise specified, "parts" represents parts by mass, and "%" represents "% by mass".

<Manufacture of carbon black dispersion>

In advance, 150 g of "SOLSPERSE 32000" manufactured by Lubrizol Corporation, which is a basic pigment dispersing resin, and 3,250 g of dipropylene glycol diacrylate were charged into a mixing vessel (volume: 10 L) equipped with a stirrer, and the mixture was stirred well until the contents became uniform to manufacture SOLSPERSE 32000 varnish A.

Then, while stirring the SOLSPERSE 32000 varnish A in the mixing vessel, 600 g of carbon black ("Special Black 350" manufactured by Orion Engineered Carbons S.A.) was charged little by little into the mixing vessel. After all of the carbon black was charged, stirring was continued for another one hour (premixing).

Then, using a "DYNO-MILL" (volume: 0.6 L) manufactured by SHINMARU ENTERPRISES CORPORATION filled with 1,800 g of zirconia beads having a diameter of 0.5 mm, circulation dispersion of the mixture was started. Then, an average particle diameter of the mixture was measured at regular time intervals (for example, one hour) using an apparatus and a method described below, and when the average particle diameter reached 180 nm or less, the circulation dispersion was terminated, thereby manufacturing a carbon black dispersion (pigment concentration of 15% by mass).

Note that the "average particle diameter" in the present disclosure is a median diameter (D50) on a volume basis, which was measured using a dynamic light scattering particle size distribution measurement device ("Nanotrac UPA-EX150" manufactured by Microtrac BEL Corp.) and, as necessary, using an inkjet ink diluted with ethyl acetate to obtain a measurable concentration.

<Manufacture of titanium oxide dispersion>

In advance, 180 g of "SOLSPERSE 32000" manufactured by Lubrizol Corporation, which is a basic pigment dispersing resin, and 2,820 g of dipropylene glycol diacrylate were charged into a mixing vessel (volume: 10 L) equipped with a stirrer, and the mixture was stirred well until the contents became uniform to manufacture SOLSPERSE 32000 varnish B.

Then, while stirring the SOLSPERSE 32000 varnish B in the mixing vessel, 3,000 g of titanium oxide ("KRONOS 2310" manufactured by KRONOS Worldwide, Inc.) was charged little by little into the mixing vessel. After all of the titanium oxide was charged, stirring was continued for another one hour (premixing).

Then, using a "DYNO-MILL" manufactured by SHINMARU ENTERPRISES CORPORATION (volume 0.6 L) filled with 1,800 g of zirconia beads having a diameter of 1 mm, circulation dispersion of the mixture was started. Then, an average particle diameter of the mixture was measured at regular intervals (for example, one hour) using the apparatus and method described above, and when the average particle diameter reached 270 nm or less, the circulation dispersion was terminated, thereby manufacturing a titanium oxide dispersion (pigment concentration of 50% by mass).

<Manufacture of inkjet ink>

Materials described in each column of Tables 1-1 to 1-10 below were charged into a mixing vessel equipped with a stirrer. After all the materials were charged, the mixture was warmed while stirring until the temperature of the mixture reached 40°C. After reaching 40°C, stirring was continued for another one hour while maintaining the temperature. Thereafter, filtration was performed with a membrane filter having a pore size of 0.8 μm to manufacture an inkjet ink.

Note that in the manufacture of the inkjet ink, the materials were charged while the mixture in the mixing container was stirred. In addition, the materials were charged in the order of a pigment dispersion, a polymerizable compound other than 5-methyl-3-vinyloxazolidine-2-one, 5-methyl-3-vinyloxazolidine-2-one, a polymerization inhibitor, a photopolymerization initiator, a surface additive, and an organic solvent. However, when an inkjet ink not including one or more of these components was manufactured, the one or more components were not charged, and a subsequent component was charged according to the order. In addition, in the case of a component including two or more types of materials, the order of charging in the component was from the one having the largest amount added.

[Table 1-1]

[Table 1-1]

| | | | Ex.1 | Ex. 2 | Ex. 3 | Ex. 4 | Ex. 5 | Ex. 6 | Ex. 7 | Ex. 8 |
|---|---|---|---|---|---|---|---|---|---|---|
| Pigment dispersion | Carbon black dispersion | | 18 | 18 | 18 | 18 | 18 | 18 | | |
| | Titanium oxide dispersion | | | | | | | | 36 | 36 |
| Polymerizable compound (A) | VMOX | HLB value:6.6 | 3 | 3 | 3 | 3 | 3 | 3 | 3 | 3 |
| | Monofunctional (meth)acrylate compound — PEA | | | 25 | 35 | 25 | 25 | 25 | | |
| | Monofunctional (meth)acrylate compound — IBXA | | | | | | | | | |
| | Monofunctional (meth)acrylate compound — BzA | | | | | | | | | |
| | Difunctional or higher acrylate compound — Difunctional acrylate monomer — HDDA | HLB value:5.0 | 63 | 38 | 28 | 35 | 18 | 13 | 45.5 | 42.5 |
| | Difunctional or higher acrylate compound — Difunctional acrylate monomer — NDDA | HLB value:4.2 | | | | | | | | |
| | Difunctional or higher acrylate compound — Difunctional acrylate monomer — BDDA | HLB value:5.7 | | | | | | | | |
| | Difunctional or higher acrylate compound — Difunctional acrylate monomer — MPDDA | HLB value:5.0 | | | | | | | | |
| | Difunctional or higher acrylate compound — DDDA | | | | | | | | | |
| | Difunctional or higher acrylate compound — DPGDA | | | | | | | | | |
| | Trifunctional or higher acrylate monomer — GlyTA | | | | | 3 | 20 | 25 | | |
| | Trifunctional or higher acrylate monomer — TMP(EO)3TA | | | | | | | | | |
| | Trifunctional or higher acrylate monomer — DiTMPTA | | | | | | | | | 3 |
| | Other polymerizable compound — VCL | | | | | | | | | |
| | Other polymerizable compound — VEEA | | | | | | | | | |
| Polymerization inhibitor | BHT | | 0.5 | 0.5 | 0.5 | 0.5 | 0.5 | 0.5 | 0.5 | 0.5 |

EP 4 733 362 A1

| | | | | Ex.1 | Ex. 2 | Ex. 3 | Ex. 4 | Ex. 5 | Ex. 6 | Ex. 7 | Ex. 8 |
|---|---|---|---|---|---|---|---|---|---|---|---|
| Photopoly merization initiator | Acylphosphine oxide-based compound | Omn819 | | 3 | 3 | 3 | 3 | 3 | 3 | 4 | 4 |
| | | TPO-L | | 7.5 | 7.5 | 7.5 | 7.5 | 7.5 | 7.5 | 8 | 8 |
| | | OmnTP | | | | | | | | | |
| | Thioxanthone-based compound | DETX | | 3 | 3 | 3 | 3 | 3 | 3 | | |
| | | OmnTX | | | | | | | | | |
| Surface additive | Siloxane-based | Having a (meth)acryloyl group | Rad2330 | HLB value:5.2 | 2 | 2 | 2 | 2 | 2 | 2 | 2 | 2 |
| | | | Rad2100 | HLB value:2.7 | | | | | | | | |
| | | | UV3530 | HLB value:8.5 | | | | | | | | |
| | | | Rad2500 | HLB value:1.3 | | | | | | | | |
| | | | UV3500 | HLB value:9.3 | | | | | | | | |
| | | | Rad2250 | HLB value:10.6 | | | | | | | | |
| | | | Rad2600 | HLB value:1.1 or less | | | | | | | | |
| | | Polyether-modified having no (meth)acryloyl group | Glide432 | HLB value:8.2 | | | | | | | | |
| | | | Glide440 | HLB value:12.5 | | | | | | | | |
| | | | BYK3420 | HLB value:13.4 | | | | | | | | |
| | Acetylene glycol-based | SF104 | HLB value:7.9 | | | | | | | | | |
| Organic solvent | DEDG | | | | | | | | | 1 | 1 |
| Total | | | | 100 | 100 | 100 | 100 | 100 | 100 | 100 | 100 |

EP 4 733 362 A1

| | | | Ex.1 | Ex. 2 | Ex. 3 | Ex. 4 | Ex. 5 | Ex. 6 | Ex. 7 | Ex. 8 |
|---|---|---|---|---|---|---|---|---|---|---|
| Specifications | Amount | Polymerizable compound (A) | 80.6 | 80.6 | 80.6 | 80.6 | 80.6 | 80.6 | 65.4 | 65.4 |
| | | 5-methyl-3-vinyloxazolidine-2-one (VMOX) | 3 | 3 | 3 | 3 | 3 | 3 | 3 | 3 |
| | | Difunctional or higher acrylate | 77.6 | 52.6 | 42.6 | 49.6 | 32.6 | 27.6 | 62.4 | 59.4 |
| | | Monofunctional (meth)acrylate | 0 | 25 | 35 | 25 | 25 | 25 | 0 | 0 |
| | | Trifunctional or higher (meth)acrylate | 0 | 0 | 0 | 3 | 20 | 25 | 0 | 3 |
| | | Polymerizable compound having a vinyl group | 3 | 3 | 3 | 3 | 3 | 3 | 3 | 3 |
| | | Siloxane-based surface additive having an HLB value of 1.3 to 13.0 | 2 | 2 | 2 | 2 | 2 | 2 | 2 | 2 |
| | Relationship between amounts | Sum of VMOX amount + Difunctional or higher acrylate amount | 80.6 | 55.6 | 45.6 | 55.6 | 55.6 | 55.6 | 65.4 | 65.4 |
| | | Ratio of monofunctional (meth)acrylate amount/difunctional or higher acrylate amount | 0 | 0.48 | 0.82 | 0.48 | 0.48 | 0.48 | 0 | 0 |
| | | Siloxane-based surface additive having an HLB value of 1.3 to 13.0 amount / VMOX amount | 0.67 | 0.67 | 0.67 | 0.67 | 0.67 | 0.67 | 0.67 | 0.67 |
| | | (TPO-L amount + OmnTX amount) / VMOX amount | 2.5 | 2.5 | 2.5 | 2.5 | 2.5 | 2.5 | 2.7 | 2.7 |
| | HLB value | Weighted average HLB value of VMOX and alkanediol diacrylate (HLBm) | 5.1 | 5.1 | 5.2 | 5.1 | 5.2 | 5.3 | 5.1 | 5.1 |
| | | (Weighted average) HLB value (HLBs) of siloxane-based surface additive having an HLB value of 1.3 to 13.0 | 5.2 | 5.2 | 5.2 | 5.2 | 5.2 | 5.2 | 5.2 | 5.2 |
| | | Difference between HLBm and HLBs | 0.1 | 0.1 | 0.0 | 0.1 | 0.0 | 0.1 | 0.1 | 0.1 |
| Evaluation results | Evaluation 1 | Curability | 3 | 3 | 2 | 4 | 4 | 4 | 2 | 3 |
| | Evaluation 2 | Adhesion | 3 | 3 | 2 | 3 | 3 | 2 | 3 | 3 |
| | Evaluation 3 | Discharge stability | 3 | 3 | 3 | 3 | 3 | 2 | 3 | 3 |
| | Evaluation 4 | Print quality — Character visibility (fineness) | 3 | 3 | 2 | 3 | 3 | 3 | 3 | 3 |
| | Evaluation 5 | Solid filling | 3 | 3 | 3 | 3 | 3 | 3 | 3 | 3 |

EP 4 733 362 A1

[Table 1-2]

[Table 1-2]

| | | | | | Ex. 9 | Ex. 10 | Ex. 11 | Ex. 12 | Ex. 13 | Ex. 14 | Ex.15 | Ex.16 |
|---|---|---|---|---|---|---|---|---|---|---|---|---|
| Pigment dispersion | | Carbon black dispersion | | | | 18 | 18 | 18 | 18 | 18 | 18 | 18 |
| | | Titanium oxide dispersion | | | 36 | | | | | | | |
| Polymerizable compound (A) | VMOX | | | HLB value:6.6 | 3 | 3 | 3 | 3 | 3 | 3 | 5 | 5 |
| | Monofunctional (meth)acrylate compound | PEA | | | | | | | | | | 25 |
| | | IBXA | | | | | | | | | | |
| | | BzA | | | | | | | | | | |
| | Difunctional or higher acrylate compound | Difunctional acrylate monomer | HDDA | HLB value:5.0 | 39.5 | 32 | 28 | 24 | 8 | 3.5 | 61 | 36 |
| | | | NDDA | HLB value:4.2 | | | | | | | | |
| | | | BDDA | HLB value:5.7 | | | | | | | | |
| | | | MPDDA | HLB value:5.0 | | 31 | 35 | 39 | 55 | 59.5 | | |
| | | DDDA | | | | | | | | | | |
| | | DPGDA | | | | | | | | | | |
| | Trifunctional or higher acrylate monomer | GlyTA | | | | | | | | | | |
| | | TMP(EO)3TA | | | | | | | | | | |
| | | DiTMPTA | | | 6 | | | | | | | |
| | Other polymerizable compound | VCL | | | | | | | | | | |
| | | VEEA | | | | | | | | | | |
| Polymerization inhibitor | | BHT | | | 0.5 | 0.5 | 0.5 | 0.5 | 0.5 | 0.5 | 0.5 | 0.5 |

EP 4 733 362 A1

25

(continued)

| | | | | Ex. 9 | Ex. 10 | Ex. 11 | Ex. 12 | Ex. 13 | Ex. 14 | Ex.15 | Ex.16 |
|---|---|---|---|---|---|---|---|---|---|---|---|
| Photopoly merization initiator | Acylphosphine oxide-based compound | Omn819 | | 4 | 3 | 3 | 3 | 3 | 3 | 3 | 3 |
| | | TPO-L | | 8 | 7.5 | 7.5 | 7.5 | 7.5 | 7.5 | 7.5 | 7.5 |
| | | OmnTP | | | | | | | | | |
| | Thioxanthone-based compound | DETX | | | 3 | 3 | 3 | 3 | 3 | 3 | 3 |
| | | OmnTX | | | | | | | | | |
| Surface additive | Siloxane-based | Having a (meth)acryloyl group | Rad2330 | HLB value:5.2 | 2 | 2 | 2 | 2 | 2 | 2 | 2 | 2 |
| | | | Rad2100 | HLB value:2.7 | | | | | | | | |
| | | | UV3530 | HLB value:8.5 | | | | | | | | |
| | | | Rad2500 | HLB value:1.3 | | | | | | | | |
| | | | UV3500 | HLB value:9.3 | | | | | | | | |
| | | | Rad2250 | HLB value:10.6 | | | | | | | | |
| | | | Rad2600 | HLB value:1.1 or less | | | | | | | | |
| | | Polyether-modified having no (meth)acryloyl group | Glide432 | HLB value:8.2 | | | | | | | | |
| | | | Glide440 | HLB value:12.5 | | | | | | | | |
| | | | BYK3420 | HLB value:13.4 | | | | | | | | |
| | Acetylene glycol-based | SF104 | HLB value:7.9 | | | | | | | | | |
| Organic solvent | | DEDG | | 1 | | | | | | | |
| Total | | | | 100 | 100 | 100 | 100 | 100 | 100 | 100 | 100 |

(continued)

|  |  |  | Ex. 9 | Ex. 10 | Ex. 11 | Ex. 12 | Ex. 13 | Ex. 14 | Ex.15 | Ex.16 |
|---|---|---|---|---|---|---|---|---|---|---|
| Specifications | Amount | Polymerizable compound (A) | 65.4 | 80.6 | 80.6 | 80.6 | 80.6 | 80.6 | 80.6 | 80.6 |
|  |  | 5-methyl-3-vinyloxazolidine-2-one (VMOX) | 3 | 3 | 3 | 3 | 3 | 3 | 5 | 5 |
|  |  | Difunctional or higher acrylate | 56.4 | 77.6 | 77.6 | 77.6 | 77.6 | 77.6 | 75.6 | 50.6 |
|  |  | Monofunctional (meth)acrylate | 0 | 0 | 0 | 0 | 0 | 0 | 0 | 25 |
|  |  | Trifunctional or higher (meth)acrylate | 6 | 0 | 0 | 0 | 0 | 0 | 0 | 0 |
|  |  | Polymerizable compound having a vinyl group | 3 | 0 | 0 | 0 | 0 | 0 | 5 | 5 |
|  |  | Siloxane-based surface additive having an HLB value of 1.3 to 13.0 | 2 | 2 | 2 | 2 | 2 | 2 | 2 | 2 |
|  | Relationship between amounts | Sum of VMOX amount + Difunctional or higher acrylate amount | 65.4 | 80.6 | 80.6 | 80.6 | 80.6 | 80.6 | 80.6 | 55.6 |
|  |  | Ratio of monofunctional (meth)acrylate amount/difunctional or higher acrylate amount | 0 | 0 | 0 | 0 | 0 | 0 | 0 | 0.49 |
|  |  | Siloxane-based surface additive having an HLB value of 1.3 to 13.0 amount / VMOX amount | 0.67 | 0.67 | 0.67 | 0.67 | 0.67 | 0.67 | 0.40 | 0.40 |
|  |  | (TPO-L amount + OmnTX amounts , VMOX amount | 2.7 | 2.5 | 2.5 | 2.5 | 2.5 | 2.5 | 1.5 | 1.5 |
|  | HLB value | Weighted average HLB value of VMOX and alkanediol diacrylate (HLBm) | 5.1 | 5.1 | 5.1 | 5.1 | 5.1 | 5.1 | 5.1 | 5.2 |
|  |  | (Weighted average) HLB value (HLBs) of siloxane-based surface additive having an HLB value of 1.3 to 13.0 | 5.2 | 5.2 | 5.2 | 5.2 | 5.2 | 5.2 | 5.2 | 5.2 |
|  |  | Difference between HLBm and HLBs | 0.1 | 0.1 | 0.1 | 0.1 | 0.1 | 0.1 | 0.1 | 0.0 |
| Evaluation results | Evaluation 1 | Curability | 3 | 3 | 3 | 3 | 3 | 3 | 4 | 4 |
|  | Evaluation 2 | Adhesion | 3 | 3 | 3 | 4 | 4 | 4 | 4 | 4 |
|  | Evaluation 3 | Discharge stability | 3 | 3 | 4 | 4 | 4 | 3 | 4 | 4 |
|  | Evaluation 4 | Print quality — Character visibility (fineness) | 3 | 3 | 3 | 3 | 3 | 3 | 4 | 4 |
|  | Evaluation 5 | Solid filling | 3 | 3 | 3 | 4 | 4 | 3 | 4 | 4 |

EP 4 733 362 A1

[Table 1-3]

[Table 1-3]

| | | | | | Ex.17 | Ex.18 | Ex.19 | Ex.20 | Ex.21 | Ex.22 | Ex. 23 | Ex. 24 |
|---|---|---|---|---|---|---|---|---|---|---|---|---|
| Pigment dispersion | | | Carbon black dispersion | | 18 | 18 | 18 | | | | 18 | |
| | | | Titanium oxide dispersion | | | | | 36 | 36 | 40 | | 36 |
| Polymerizable compound (A) | | VMOX | | HLB value:6.6 | 5 | 5 | 5 | 5 | 4.5 | 4.5 | 10 | 10 |
| | Monofunctional (meth)acrylate compound | | PEA | | 35 | | | | | | | |
| | | | IBXA | | | | | | | | | |
| | | | BzA | | | | | | | | | |
| | Difunctional or higher acrylate compound | Difunctional acrylate monomer | HDDA | HLB value:5.0 | 26 | 38.5 | 26 | 44.5 | 43 | 36 | 56 | 39.5 |
| | | | NDDA | HLB value:4.2 | | | | | | | | |
| | | | BDDA | HLB value:5.7 | | | | | | | | |
| | | | MPDDA | HLB value:5.0 | | | | | | | | |
| | | | DDDA | | | | | | | | | |
| | | | DPGDA | | | | | | | | | |
| | | Trifunctional or higher acrylate monomer | GlyTA | | | | | | | | | |
| | | | TMP(EO)3TA | | | | | | | | | |
| | | | DiTMPTA | | | | | | | | | |
| | Other polymerizable compound | | VCL | | | | | | | | | |
| | | | VEEA | | | 22.5 | 35 | | | | | |
| Po lymerization inhibitor | | | BHT | | 0.5 | 0.5 | 0.5 | 0.5 | 0.5 | 0.5 | 0.5 | 0.5 |

| | | | | Ex.17 | Ex.18 | Ex.19 | Ex.20 | Ex.21 | Ex.22 | Ex. 23 | Ex. 24 |
|---|---|---|---|---|---|---|---|---|---|---|---|
| Photopolymerization initiator | Acylphosphine oxide-based compound | Omn819 | | 3 | 3 | 3 | 4 | 4 | 4 | 3 | 4 |
| | | TPO-L | | 7.5 | 7.5 | 7.5 | 8 | 8 | 8 | 7.5 | 8 |
| | | OmnTP | | | | | | | | | |
| | Thioxanthone-based compound | DETX | | 3 | 3 | 3 | | | | 3 | |
| | | OmnTX | | | | | | | | | |
| Surface additive | Siloxane-based | Having a (meth)acryloyl group | Rad2330 | HLB value:5.2 | 2 | 2 | 2 | 2 | 2 | 2 | 2 | 2 |
| | | | Rad2100 | HLB value:2.7 | | | | | | | | |
| | | | UV3530 | HLB value:8.5 | | | | | | | | |
| | | | Rad2500 | HLB value:1.3 | | | | | | | | |
| | | | UV3500 | HLB value:9.3 | | | | | | | | |
| | | | Rad2250 | HLB value:10.6 | | | | | | | | |
| | | | Rad2600 | HLB value:1.1 or less | | | | | | | | |
| | | Polyether-modified having no (meth)acryloyl group | Glide432 | HLB value:8.2 | | | | | | | | |
| | | | Glide440 | HLB value:12.5 | | | | | | | | |
| | | | BYK3420 | HLB value:13.4 | | | | | | | | |
| | Acetylene glycol-based | SF104 | HLB value:7.9 | | | | | | | | | |
| Organic solvent | | | \| DEDG | | | | | | 2 | 5 | 100 | |
| Total | | | | | 100 | 100 | 100 | 100 | | 100 | | 100 |

EP 4 733 362 A1

| | | | Ex.17 | Ex.18 | Ex.19 | Ex.20 | Ex.21 | Ex.22 | Ex. 23 | Ex. 24 |
|---|---|---|---|---|---|---|---|---|---|---|
| Specifications | Amount | Polymerizable compound (A) | 806 | 80.6 | 80.6 | 66.4 | 64.4 | 59.3 | 806 | 66.4 |
| | | 5-methyl-3-vinyloxazolidine-2-one (VMOX) | 5 | 5 | 5 | 5 | 4.5 | 4.5 | 10 | 10 |
| | | Difunctional or higher acrylate | 40.6 | 53.1 | 40.6 | 61.4 | 59.9 | 54.8 | 70.6 | 56.4 |
| | | Monofunctional (meth)acrylate | 35 | 0 | 0 | 0 | 0 | 0 | 0 | 0 |
| | | Trifunctional or higher (meth)acrylate | 0 | 0 | 0 | 0 | 0 | 0 | 0 | 0 |
| | | Polymerizable compound having a vinyl group | 5 | 27.5 | 40 | 5 | 4.5 | 4.5 | 10 | 10 |
| | | Siloxane-based surface additive having an HLB value of 1.3 to 13.0 | 2 | 2 | 2 | 2 | 2 | 2 | 2 | 2 |
| | Relatinship between amounts | Sum of VMOX amount + Difunctional or higher acrylate amount | 45.6 | 58.1 | 45.6 | 66.4 | 64.4 | 59.3 | 80.6 | 66.4 |
| | | Ratio of monofunctional (meth)acrylate amount /difunctional or higher acrylate amount | 0.86 | 0 | 0 | 0 | 0 | 0 | 0 | 0 |
| | | Siloxane-based surface additive having an HLB value of 1.3 to 13.0 amount / VMOX amount | 0.40 | 0.40 | 0.40 | 0.40 | 0.44 | 0.44 | 0.20 | 0.20 |
| | | (TPO-L amount + OmnTX amount) / VMOX amount | 1.5 | 1.5 | 1.5 | 1.6 | 1.8 | 1.8 | 0.75 | 0.80 |
| | HLB value | Weighted average HLB value of VMOX and alkanediol diacrylate (HLBm) | 5.3 | 5.2 | 5.3 | 5.2 | 5.2 | 5.2 | 5.2 | 5.3 |
| | | (Weighted average) HLB value (HLBs) of siloxane-based surface additive having an HLB value of 1.3 to 13.0 | 5.2 | 5.2 | 5.2 | 5.2 | 5.2 | 5.2 | 5.2 | 5.2 |
| | | Difference between HLBm and HLBs | 0.1 | 0.0 | 0.1 | 0.0 | 0.0 | 0.0 | 0.0 | 0.1 |
| Evaluation results | Evaluation 1 | Curability | 2 | 4 | 3 | 4 | 3 | 2 | 4 | 4 |
| | Evaluation 2 | Adhesion | 2 | 4 | 3 | 4 | 4 | 3 | 4 | 4 |
| | Evaluation 3 | Discharge stability | 4 | 4 | 4 | 4 | 4 | 3 | 4 | 4 |
| | Evaluation 4 | Print quality — Character visibility (fineness) | 3 | 4 | 4 | 4 | 4 | 3 | 4 | 4 |
| | Evaluation 5 | Solid filling | 4 | 4 | 4 | 4 | 4 | 4 | 4 | 4 |

EP 4 733 362 A1

[Table 1-4]

[Table 1-4]

| | | | | Ex. 25 | Ex. 26 | Ex. 27 | Ex. 28 | Ex. 29 | Ex. 30 | Ex. 31 | Ex. 32 | Ex. 33 | Ex. 34 |
|---|---|---|---|---|---|---|---|---|---|---|---|---|---|
| Pigment dispersion | | Carbon black dispersion | | 18 | | 18 | | 18 | | 18 | | 18 | 18 |
| | | Titanium oxide dispersion | | | 36 | | 36 | | 36 | | 36 | | |
| Polymerizable compound (A) | | VMOX | HLB value:6.6 | 10 | 36 10 | 10 | 36 10 | 10 | 36 10 | 10 | 36 10 | 10 | 10 |
| | Monofunctional (meth)acrylate compound | PEA | | | | | | | | | | | 20 |
| | | IBXA | | | | | | | | | | | |
| | | BzA | | | | | | | | 5 | 5 | | |
| | Difunction al or higher acrylate compound | Difunctional acrylate monomer | HDDA | HLB value:5.0 | | | | | | | | | 36 |
| | | | NDDA | HLB value:4.2 | 56 | 39.5 | | | | | | | |
| | | | BDDA | HLB value:5.7 | | | 56 | 39.5 | | | | | |
| | | | MPDDA | HLB value:5.0 | | | | | 56 | 39.5 | | | |
| | | DDDA | | | | | | | | 20 | 20 | | |
| | | DPGDA | | | | | | | | 31 | 14.5 | 56 | |
| | Trifunctional or higher acrylate monomer | GlyTA | | | | | | | | | | | |
| | | TMP(EO)3TA | | | | | | | | | | | |
| | | DiTMPTA | | | | | | | | | | | |
| | Other polymerizable compound | VCL | | | | | | | | | | | |
| | | VEEA | | | | | | | | | | | |
| Po lymerization inhibitor | | BHT | | 0.5 | 0.5 | 0.5 | 0.5 | 0.5 | 0.5 | 0.5 | 0.5 | 0.5 | 0.5 |

(continued)

|  |  |  |  |  | Ex. 25 | Ex. 26 | Ex. 27 | Ex. 28 | Ex. 29 | Ex. 30 | Ex. 31 | Ex. 32 | Ex. 33 | Ex. 34 |
|---|---|---|---|---|---|---|---|---|---|---|---|---|---|---|
| Photopoly merization initiator | Acylphosphine oxide-based compound | | Omn819 | | 3 | 4 | 3 | 4 | 3 | 4 | 3 | 4 | 3 | 3 |
| | | | TPO-L | | 7.5 | 8 | 7.5 | 8 | 7.5 | 8 | 7.5 | 8 | 7.5 | 7.5 |
| | | | OmnTP | | | | | | | | | | | |
| | Thioxanthone-based compound | | DETX | | 3 | | 3 | | 3 | | 3 | | 3 | 3 |
| | | | OmnTX | | | | | | | | | | | |
| Surface additive | Siloxane-based | Having a (meth)acryloyl group | Rad2330 | HLB value:5.2 | 2 | 2 | 2 | 2 | 2 | 2 | 2 | 2 | 2 | 2 |
| | | | Rad2100 | HLB value:2.7 | | | | | | | | | | |
| | | | UV3530 | HLB value:8.5 | | | | | | | | | | |
| | | | Rad2500 | HLB value:1.3 | | | | | | | | | | |
| | | | UV3500 | HLB value:9.3 | | | | | | | | | | |
| | | | Rad2250 | HLB value:10.6 | | | | | | | | | | |
| | | | Rad2600 | HLB value:1.1 or less | | | | | | | | | | |
| | | Polyether-modified having no (meth)acryloyl group | Glide432 | HLB value:8.2 | | | | | | | | | | |
| | | | Glide440 | HLB value:12.5 | | | | | | | | | | |
| | | | BYK3420 | HLB value:13.4 | | | | | | | | | | |
| | Acetylene glycol-based | | SF 104 | HLB value:7.9 | | | | | | | | | | |
| Organic solvent | | | DEDG | | | | | | | | | | | |
| Total | | | | | 100 | 100 | 100 | 100 | 100 | 100 | 100 | 100 | 100 | 100 |

EP 4 733 362 A1

34

| | | | Ex. 25 | Ex. 26 | Ex. 27 | Ex. 28 | Ex. 29 | Ex. 30 | Ex. 31 | Ex. 32 | Ex. 33 | Ex. 34 |
|---|---|---|---|---|---|---|---|---|---|---|---|---|
| Specifications | Amount | Polymerizable compound (A) | 80.6 | 66.4 | 80.6 | 66.4 | 80.6 | 66.4 | 80.6 | 66.4 | 80.6 | 80.6 |
| | | 5-methyl-3-vinyloxazolidine-2-one (VMOX) | 10 | 10 | 10 | 10 | 10 | 10 | 10 | 10 | 10 | 10 |
| | | Difunctional or higher acrylate | 70.6 | 56.4 | 70.6 | 56.4 | 70.6 | 56.4 | 65.6 | 51.4 | 70.6 | 50.6 |
| | | Monofunctional (meth)acrylate | 0 | 0 | 0 | 0 | 0 | 0 | 5 | 5 | 0 | 20 |
| | | Trifunctional or higher (meth)acrylate | 0 | 0 | 0 | 0 | 0 | 0 | 0 | 0 | 0 | 0 |
| | | Polymerizable compound having a vinyl group | 0 | 0 | 10 | 10 | 10 | 10 | 10 | 10 | 10 | 10 |
| | | Siloxane-based surface additive having an HLB value of 1.3 to 13.0 | 2 | 2 | 2 | 2 | 2 | 2 | 2 | 2 | 2 | 2 |
| | Relationship between amounts | Sum of VMOX amount + Difunctional or higher acrylate amount | 80.6 | 66.4 | 80.6 | 66.4 | 80.6 | 66.4 | 75.6 | 61.4 | 80.6 | 60.6 |
| | | Ratio of monofunctional (meth)acrylate amount /difunctional or higher acrylate amount | 0 | 0 | 0 | 0 | 0 | 0 | 0.08 | 0.10 | 0 | 0.40 |
| | | Siloxane-based surface additive having an HLB value of 1.3 to 13.0 amount / VMOX amount | 0.20 | *0.20* | 0.20 | 0.20 | 0.20 | 0.20 | 0.20 | 0.20 | 0.20 | 0.20 |
| | | (TPO-L amount + OmnTX amount) / VMOX amount | 0.75 | 0.80 | 0.75 | 0.80 | 0.75 | 0.80 | 0.75 | 0.80 | 0.75 | 0.75 |
| | HLB value | Weighted average HLB value of VMOX and alkanediol diacrylate (HLBm) | 4.6 | 4.7 | 5.8 | 5.9 | 5.2 | 5.3 | --- | --- | --- | 5.3 |
| | | (Weighted average) HLB value (HLBs) of siloxane-based surface additive having an HLB value of 1.3 to 13.0 | 5.2 | 5.2 | 5.2 | 5.2 | 5.2 | 5.2 | 5.2 | 5.2 | 5.2 | 5.2 |
| | | Difference between HLBm and HLBs | 0.6 | 0.5 | 0.6 | 0.7 | 00 | 0.1 | --- | --- | --- | 0.1 |
| Evaluation results | Evaluation 1 | Curability | 4 | 4 | 4 | 4 | 4 | 4 | 3 | 3 | 3 | 4 |
| | Evaluation 2 | Adhesion | 4 | 4 | 4 | 4 | 4 | 4 | 4 | 4 | 4 | 4 |
| | Evaluation 3 | Discharge stability | 4 | 4 | 4 | 4 | 4 | 4 | 4 | 4 | 4 | 4 |
| | Evaluation 4 | Print quality — Character visibility (fineness) | 4 | 4 | 4 | 4 | 4 | 4 | 4 | 4 | 4 | 4 |
| | Evaluation 5 | Solid filling | 4 | 4 | 4 | 4 | 4 | 4 | 4 | 3 | 4 | 4 |

[Table 1-5]

[Table 1-5]

| | | | | Ex. 35 | Ex. 36 | Ex. 37 | Ex. 38 | Ex. 39 | Ex. 40 | Ex. 41 | Ex. 42 | Ex. 43 | Ex. 44 |
|---|---|---|---|---|---|---|---|---|---|---|---|---|---|
| Pigment dispersion | Carbon black dispersion | | | 18 | 18 | 18 | 18 | 18 | 18 | 18 | 18 | 18 | 18 |
| | Titanium oxide dispersion | | | | | | | | | | | | |
| Polymerizable compound (A) | Monofunctional (meth)acrylate compound | VMOX | HLB value:6.6 | 10 | 10 | 10 | 10 | 10 | 10 | 10 | 10 | 10 | 10 |
| | | PEA | | | | 25 | 35 | 25 | 25 | 25 | 25 | 25 | 25 |
| | | IBXA | | 20 | | | | | | | | | |
| | | BzA | | | 20 | | | | | | | | |
| | Difunctional or higher acrylate compound | Difunctional acrylate monomer | HDDA | HLB value:5.0 | 36 | 36 | 31 | 21 | 28 | 28 | 28 | 11 | 11 | 11 |
| | | | NDDA | HLB value:4.2 | | | | | | | | | | |
| | | | BDDA | HLB value:5.7 | | | | | | | | | | |
| | | | MPDDA | HLB value:5.0 | | | | | | | | | | |
| | | | DDDA | | | | | | | | | | | |
| | | | DPGDA | | | | | | | | | | | |
| | | Trifunctional or higher acrylate monomer | GlyTA | | | | | | 3 | | | 20 | | |
| | | | TMP(EO)3TA | | | | | | | 3 | | | 20 | |
| | | | DiTMPTA | | | | | | | | 3 | | | 20 |
| | Other polymerizable compound | VCL | | | | | | | | | | | | |
| | | VEEA | | | | | | | | | | | | |
| Polymerization inhibitor | | BHT | | 0.5 | 0.5 | 0.5 | 0.5 | 0.5 | 0.5 | 0.5 | 0.5 | 0.5 | 0.5 |

| | | | | Ex. 35 | Ex. 36 | Ex. 37 | Ex. 38 | Ex. 39 | Ex. 40 | Ex. 41 | Ex. 42 | Ex. 43 | Ex. 44 |
|---|---|---|---|---|---|---|---|---|---|---|---|---|---|
| Photopoly merization initiator | Acylphosphine oxide-based compound | Omn819 | | 3 | 3 | 3 | 3 | 3 | 3 | 3 | 3 | 3 | 3 |
| | | TPO-L | | 7.5 | 7.5 | 7.5 | 7.5 | 7.5 | 7.5 | 7.5 | 7.5 | 7.5 | 7.5 |
| | | OmnTP | | | | | | | | | | | |
| | Thioxanthone-based compound | DETX | | 3 | 3 | 3 | 3 | 3 | 3 | 3 | 3 | 3 | 3 |
| | | OmnTX | | | | | | | | | | | |
| Surface additive | Siloxane-based | Having a (meth)acryloyl group | Rad2330 | HLB value:5.2 | 2 | 2 | 2 | 2 | 2 | 2 | 2 | 2 | 2 | 2 |
| | | | Rad2100 | HLB value:2.7 | | | | | | | | | | |
| | | | UV3530 | HLB value:8.5 | | | | | | | | | | |
| | | | Rad2500 | HLB value:1.3 | | | | | | | | | | |
| | | | UV3500 | HLB value:9.3 | | | | | | | | | | |
| | | | Rad2250 | HLB value:10.6 | | | | | | | | | | |
| | | | Rad2600 | HLB value:1.1 or less | | | | | | | | | | |
| | | Polyether-modified having no (meth)acryloyl group | Glide432 | HLB value:8.2 | | | | | | | | | | |
| | | | Glide440 | HLB value:1 2.5 | | | | | | | | | | |
| | | | BYK3420 | HLB value:13.4 | | | | | | | | | | |
| | Acetylene glycol-based | SF104 | HLB value:7.9 | | | | | | | | | | | |
| Organic solvent | | DEDG | | | | | | | | | | | |
| Total | | | | 100 | 100 | 100 | 100 | 100 | 100 | 100 | 100 | 100 | 100 |

EP 4 733 362 A1

38

(continued)

| | | | Ex. 35 | Ex. 36 | Ex. 37 | Ex. 38 | Ex. 39 | Ex. 40 | Ex. 41 | Ex. 42 | Ex. 43 | Ex. 44 |
|---|---|---|---|---|---|---|---|---|---|---|---|---|
| Specificat ions | Amount | Polymerizable compound (A) | 80.6 | 80.6 | 80.6 | 80.6 | 80.6 | 80.6 | 80.6 | 80.6 | 80.6 | 80.6 |
| | | 5-methyl-3-vinyloxazolidine-2-one (VMOX) | 10 | 10 | 10 | 10 | 10 | 10 | 10 | 10 | 10 | 10 |
| | | Difunctional or higher acrylate | 50.6 | 50.6 | 45.6 | 35.6 | 42.6 | 42.6 | 42.6 | 25.6 | 25.6 | 25.6 |
| | | Monofunctional (meth)acrylate | 20 | 20 | 25 | 35 | 25 | 25 | 25 | 25 | 25 | 25 |
| | | Trifunctional or higher (meth)acrylate | 0 | 0 | 0 | 0 | 3 | 3 | 3 | 20 | 20 | 20 |
| | | Polymerizable compound having a vinyl group | 10 | 10 | 10 | 10 | 10 | 10 | 10 | 10 | 10 | 10 |
| | | Siloxane-based surface additive having an HLB value of 1.3 to 13.0 | 2 | 2 | 2 | 2 | 2 | 2 | 2 | 2 | 2 | 2 |
| | Relationship between amounts | Sum of VMOX amount + Difunctional or higher acrylate amount | 60.6 | 60.6 | 55.6 | 45.6 | 55.6 | 55.6 | 55.6 | 55.6 | 55.6 | 55.6 |
| | | Ratio of monofunctional (meth)acrylate amount/difunctional or higher acrylate amount | 0.40 | 0.40 | 0.55 | 0.98 | 0.55 | 0.55 | 0.55 | 0.55 | 0.55 | 0.55 |
| | | Siloxane-based surface additive having an HLB value of 1.3 to 13.0 amount / VMOX amount | 0.20 | 0.20 | 0.20 | 0.20 | 0.20 | 0.20 | 0.20 | 0.20 | 0.20 | 0.20 |
| | | (TPO-L amount + OmnTX amount) / VMOX amount | 0.75 | 0.75 | 0.75 | 0.75 | 0.75 | 0.75 | 0.75 | 0.75 | 0.75 | 0.75 |
| | HLB value | Weighted average HLB value of VMOX and alkanediol diacrylate (HLBm) | 5.3 | 5.3 | 5.4 | 5.5 | 5.4 | 5.4 | 5.4 | 5.8 | 5.8 | 5.8 |
| | | (Weighted average) HLB value (HLBs) of siloxane-based surface additive having an HLB value of 1.3 to 13.0 | 5.2 | 5.2 | 5.2 | 5.2 | 5.2 | 5.2 | 5.2 | 5.2 | 5.2 | 5.2 |
| | | Difference between HLBm and HLBs | 0.1 | 0.1 | 0.2 | 0.3 | 0.2 | 0.2 | 0.2 | 0.6 | 0.6 | 0.6 |
| Evaluation results | Evaluation 1 | Curability | 4 | 4 | 3 | 2 | 4 | 4 | 4 | 4 | 4 | 4 |
| | Evaluation 2 | Adhesion | 4 | 4 | 3 | 2 | 4 | 4 | 4 | 3 | 3 | 3 |
| | Evaluation 3 | Discharge stability | 4 | 4 | 4 | 4 | 4 | 4 | 4 | 4 | 4 | 4 |
| | Evaluation 4 | Print quality — Character visibility (fineness) | 4 | 4 | 4 | 3 | 4 | 4 | 4 | 4 | 4 | 4 |
| | Evaluation 5 | Solid filling | 4 | 4 | 4 | 4 | 4 | 4 | 4 | 4 | 4 | 4 |

[Table 1-6]

[Table 1-6]

| | | | | Ex. 45 | Ex. 46 | Ex. 47 | Ex. 48 | Ex. 49 | Ex. 50 | Ex. 51 | Ex. 52 | Ex. 53 | Ex. 54 |
|---|---|---|---|---|---|---|---|---|---|---|---|---|---|
| Pigment dispersion | | Carbon black dispersion | | 18 | 18 | 18 | 18 | 18 | | | 18 | 18 | 18 |
| | | Titanium oxide dispersion | | | | | | | 36 | 36 | | | |
| Polymerizable compound (A) | | VMOX | HLB value:6.6 | 10 | 10 | 10 | 10 | 10 | 10 | 10 | 15 | 20 | 20 |
| | Monofunctional (meth)acrylate compound | PEA | | 25 | | | | | | | | | |
| | | IBXA | | | | | | | | | | | |
| | | BzA | | | | | | | | | | | |
| | Difunctional or higher acrylate compound | Difunctional acrylate monomer | HDDA | HLB value:5.0 | 6 | 31 | 38.5 | 30 | 21 | 27 | 14.5 | 51 | 46 | 31 |
| | | | NDDA | HLB value:4.2 | | | | | | | | | | |
| | | | BDDA | HLB value:5.7 | | | | | | | | | | |
| | | | MPDDA | HLB value:5.0 | | | | | | | | | | |
| | | DDDA | | | | | | | | | | | |
| | | DPGDA | | | | | | | | | | | |
| | Trifunctional or higher acrylate monomer | GlyTA | | 25 | 25 | | | | | | | | |
| | | TMP(EO)3TA | | | | | | | | | | | |
| | | DiTMPTA | | | | | | | | | | | |
| | Other polymerizable compound | VCL | | | | | | | | | | | |
| | | VEEA | | | | 17.5 | 26 | 35 | 12.5 | 25 | | | 15 |
| Polymerization inhibitor | | BHT | | 0.5 | 0.5 | 0.5 | 0.5 | 0.5 | 0.5 | 0.5 | 0.5 | 0.5 | 0.5 |
| Photopolymerization initiator | Acylphosphine oxide-based compound | Omn819 | | 3 | 3 | 3 | 3 | 3 | 4 | 4 | 3 | 3 | 3 |
| | | TPO-L | | 7.5 | 7.5 | 7.5 | 7.5 | 7.5 | 8 | 8 | 7.5 | 7.5 | 7.5 |
| | | OmnTP | | | | | | | | | | | |
| | Thioxanthone-based compound | DETX | | 3 | 3 | 3 | 3 | 3 | | | 3 | 3 | 3 |
| | | OmnTX | | | | | | | | | | | |

EP 4 733 362 A1

41

(continued)

| | | Ex. 45 | Ex. 46 | Ex. 47 | Ex. 48 | Ex. 49 | Ex. 50 | Ex. 51 | Ex. 52 | Ex. 53 | Ex. 54 |
|---|---|---|---|---|---|---|---|---|---|---|---|
| Surface additive | Siloxane-based — Having a (meth)acryloyl group | | | | | | | | | | |
| | Rad2330 / HLB value:5.2 | 2 | 2 | 2 | 2 | 2 | 2 | 2 | 2 | 2 | 2 |
| | Rad2100 / HLB value:2.7 | | | | | | | | | | |
| | UV3530 / HLB value:8.5 | | | | | | | | | | |
| | Rad2500 / HLB value:1.3 | | | | | | | | | | |
| | UV3500 / HLB value:9.3 | | | | | | | | | | |
| | Rad2250 / HLB value:10.6 | | | | | | | | | | |
| | having no (meth)acryloyl group — Rad2600 / HLB value:1.1 or less | | | | | | | | | | |
| | Polyether-modified — Glide432 / HLB value:8.2 | | | | | | | | | | |
| | Glide440 / HLB value:12.5 | | | | | | | | | | |
| | BYK3420 / HLB value:13.4 | | | | | | | | | | |
| | Acetylene glycol-based — SF104 / HLB value:7.9 | | | | | | | | | | |
| Organic solvent | DEDG | | | | | | | | | | |
| Total | | 100 | 100 | 100 | 100 | 100 | 100 | 100 | 100 | 100 | 100 |
| Amount | Polymerizable compound (A) | 80.6 | 80.6 | 80.6 | 80.6 | 80.6 | 66.4 | 66.4 | 80.6 | 80.6 | 80.6 |
| | 5-methyl-3-vinyloxazolidine-2-one (VMOX) | 10 | 10 | 10 | 10 | 10 | 10 | 10 | 15 | 20 | 20 |
| | Difunctional or higher acrylate | 20.6 | 45.6 | 53.1 | 44.6 | 35.6 | 43.9 | 31.4 | 65.6 | 60.6 | 45.6 |
| | Monofunctional (meth)acrylate | 25 | 0 | 0 | 0 | 0 | 0 | 0 | 0 | 0 | 0 |
| | Trifunctional or higher (meth)acrylate | 25 | 25 | 0 | 0 | 0 | 0 | 0 | 0 | 0 | 0 |
| | Polymerizable compound having a vinyl group | 10 | 10 | 27.5 | 36 | 45 | 22.5 | 35 | 15 | 20 | 35 |
| | Siloxane-based surface additive having an HLB value of 1.3 to 13.0 | 2 | 2 | 2 | 2 | 2 | 2 | 2 | 2 | 2 | 2 |

(continued)

| | | | Ex. 45 | Ex. 46 | Ex. 47 | Ex. 48 | Ex. 49 | Ex. 50 | Ex. 51 | Ex. 52 | Ex. 53 | Ex. 54 |
|---|---|---|---|---|---|---|---|---|---|---|---|---|
| Specifications | Relationship between amounts | Sum of VMOX amount + Difunctional or higher acrylate amount | 55.6 | 80.6 | 63.1 | 54.6 | 45.6 | 53.9 | 41.4 | 80.6 | 80.6 | 65.6 |
| | | Ratio of monofunctional (meth)acrylate amount /difunctional or higher acrylate amount | 0.55 | 0 | 0 | 0 | 0 | 0 | 0 | 0 | 0 | 0 |
| | | Siloxane-based surface additive having an HLB value of 1.3 to 13.0 amount / VMOX amount | 0.20 | 0.20 | 0.20 | 0.20 | 0.20 | 0.20 | 0.20 | 0.13 | 0.10 | 0.10 |
| | | (TPO-L amount + OmnTX amount) / VMOX amount | 0.75 | 0.75 | 0.75 | 0.75 | 0.75 | 0.80 | 0.80 | 0.50 | 0.38 | 0.38 |
| | HLB value | Weighted average HLB value of VMOX and alkanediol diacrylate (HLBm) | 6.0 | 5.4 | 5.3 | 5.4 | 5.5 | 5.4 | 5.7 | 5.4 | 5.5 | 5.6 |
| | | (Weighted average) HLB value (HLBs) of siloxane-based surface additive having an HLB value of 1.3 to 13.0 | 5.2 | 5.2 | 5.2 | 5.2 | 5.2 | 5.2 | 5.2 | 5.2 | 5.2 | 5.2 |
| | | Difference between HLBm and HLBs | 0.8 | 0.2 | 0.1 | 0.2 | 0.3 | 0.2 | 0.5 | 0.2 | 0.3 | 0.4 |
| Evaluation results | Evaluation 1 | Curability | 4 | 4 | 4 | 3 | 2 | 4 | 3 | 4 | 4 | 3 |
| | Evaluation 2 | Adhesion | 2 | 2 | 4 | 3 | 2 | 4 | 2 | 4 | 4 | 3 |
| | Evaluation 3 | Discharge stability | 3 | 3 | 4 | 4 | 4 | 4 | 4 | 4 | 4 | 4 |
| | Evaluation 4 | Print quality — Character visibility (fineness) | 4 | 4 | 4 | 4 | 3 | 4 | 4 | 4 | 4 | 4 |
| | Evaluation 5 | Solid filling | 4 | 4 | 4 | 4 | 4 | 4 | 4 | 4 | 4 | 4 |

[Table 1-7]

[Table 1-7]

[Table 1-7]

| | | | | Ex. 55 | Ex. 56 | Ex. 57 | Ex. 58 | Ex. 59 | Ex. 60 | Ex. 61 | Ex. 62 | Ex. 63 | Ex. 64 |
|---|---|---|---|---|---|---|---|---|---|---|---|---|---|
| Pigment dispersion | | Carbon black dispersion | | 18 | 18 | 18 | 18 | 18 | 18 | 18 | 18 | 18 | 18 |
| | | Titanium oxide dispersion | | | | | | | | | | | |
| Polymerizable compound (A) | | VMOX | HLB value:6.6 | 20 | 25 | 25 | 25 | 25 | 25 | 25 | 10 | 10 | 10 |
| | Monofunctional (meth)acrylate compound | PEA | | | | 18 | 24 | 18 | 18 | 18 | | | |
| | | IBXA | | | | | | | | | | | |
| | | BzA | | | | | | | | | | | |
| | Difunctional or higher acrylate compound | Difunctional acrylate monomer | HDDA | HLB value:5.0 | 21 | 41 | 23 | 17 | 20 | 3 | | 57 | 56.5 | 54 |
| | | | NDDA | HLB value:4.2 | | | | | | | | | | |
| | | | BDDA | HLB value:5.7 | | | | | | | | | | |
| | | | MPDDA | HLB value:5.0 | | | | | | | | | | |
| | | | DDDA | | | | | | | | | | | |
| | | | DPGDA | | | | | | | | | | | |
| | | Trifunctional or higher acrylate monomer | GlyTA | | | | | | 3 | 20 | 23 | | | |
| | | | TMP(EO)3TA | | | | | | | | | | | |
| | | | DiTMPTA | | | | | | | | | | | |
| | Other polymerizable compound | VCL | | | | | | | | | | | |
| | | VEEA | | 25 | | | | | | | | | |
| Polymerization inhibitor | | BHT | | 0.5 | 0.5 | 0.5 | 0.5 | 0.5 | 0.5 | 0.5 | 0.5 | 0.5 | 0.5 |

(continued)

| | | | | Ex. 55 | Ex. 56 | Ex. 57 | Ex. 58 | Ex. 59 | Ex. 60 | Ex. 61 | Ex. 62 | Ex. 63 | Ex. 64 |
|---|---|---|---|---|---|---|---|---|---|---|---|---|---|
| Photopoly merization initiator | Acylphosphine oxide-based compound | Omn819 | | 3 | 3 | 3 | 3 | 3 | 3 | 3 | 3 | 3 | 3 |
| | | TPO-L | | 7.5 | 7.5 | 7.5 | 7.5 | 7.5 | 7.5 | 7.5 | 7.5 | 7.5 | 7.5 |
| | | OmnTP | | | | | | | | | | | |
| | Thioxanthone-based compound | DETX | | 3 | 3 | 3 | 3 | 3 | 3 | 3 | 3 | 3 | 3 |
| | | OmnTX | | | | | | | | | | | |
| Surface ad-ditive | Siloxane-based | Having a (meth)acry-loyl group | Rad2330 | HLB value:5.2 | 2 | 2 | 2 | 2 | 2 | 2 | 2 | 1 | 1.5 | 4 |
| | | | Rad2100 | HLB value:2.7 | | | | | | | | | | |
| | | | UV3530 | HLB value:8.5 | | | | | | | | | | |
| | | | Rad2500 | HLB value:1.3 | | | | | | | | | | |
| | | | UV3500 | HLB value:9.3 | | | | | | | | | | |
| | | | Rad2250 | HLB value:10.6 | | | | | | | | | | |
| | | | Rad2600 | HLB value:1.1 or less | | | | | | | | | | |
| | | Polyether-modified having no (meth)acryloyl group | Glide432 | HLB value:8.2 | | | | | | | | | | |
| | | | Glide440 | HLB value:12.5 | | | | | | | | | | |
| | | | BYK3420 | HLB value:13.4 | | | | | | | | | | |
| | Acetylene glycol-based | SF104 | HLB value:7.9 | | | | | | | | | | | |
| Organic solvent | | DEDG | | | | | | | | | | | |
| Total | | | | 100 | 100 | 100 | 100 | 100 | 100 | 100 | 100 | 100 | 100 |

(continued)

| | | | Ex. 55 | Ex. 56 | Ex. 57 | Ex. 58 | Ex. 59 | Ex. 60 | Ex. 61 | Ex. 62 | Ex. 63 | Ex. 64 |
|---|---|---|---|---|---|---|---|---|---|---|---|---|
| Specifications | Amount | Polymerizable compound (A) | 80.6 | 80.6 | 80.6 | 80.6 | 80.6 | 80.6 | 80.6 | 81.6 | 81.1 | 78.6 |
| | | 5-methyl-3-vinyloxazolidine-2-one (VMOX) | 20 | 25 | 25 | 25 | 25 | 25 | 25 | 10 | 10 | 10 |
| | | Difunctional or higher acrylate | 35.6 | 55.6 | 37.6 | 31.6 | 34.6 | 17.6 | 14.6 | 71.6 | 71.1 | 68.6 |
| | | Monofunctional (meth)acrylate | 0 | 0 | 18 | 24 | 18 | 18 | 18 | 0 | 0 | 0 |
| | | Trifunctional or higher (meth)acrylate | 0 | 0 | 0 | 0 | 3 | 20 | 23 | 0 | 0 | 0 |
| | | Polymerizable compound having a vinyl group | 45 | 25 | 25 | 25 | 25 | 25 | 25 | 10 | 10 | 10 |
| | | Siloxane-based surface additive having an HLB value of 1.3 to 13.0 | 2 | 2 | 2 | 2 | 2 | 2 | 2 | 1 | 1.5 | 4 |
| | Relationship between amounts | Sum of VMOX amount + Difunctional or higher acrylate amount | 55.6 | 80.6 | 62.6 | 56.6 | 62.6 | 62.6 | 62.6 | 81.6 | 81.1 | 78.6 |
| | | Ratio of monofunctional (meth)acrylate amount/difunctional or higher acrylate amount | 0 | 0 | 0.48 | 0.76 | 0.48 | 0.48 | 0.48 | 0 | 0 | 0 |
| | | Siloxane-based surface additive having an HLB value of 1.3 to 13.0 amount / VMOX amount | 0.10 | 0.080 | 0.080 | 0.080 | 0.080 | 0.080 | 0.080 | 0.10 | 0.15 | 0.40 |
| | | (TPO-L amount + OmnTX amount) / VMOX amount | 0.38 | 0.30 | 0.30 | 0.30 | 0.30 | 0.30 | 0.30 | 0.75 | 0.75 | 0.75 |
| | HLB value | Weighted average HLB value of VMOX and alkanediol diacrylate (HLBm) | 5.8 | 5.6 | 5.8 | 6.0 | 5.9 | 6.4 | --- | 5.2 | 5.2 | 5.3 |
| | | (Weighted average) HLB value (HLBs) of siloxane-based surface additive having an HLB value of 1.3 to 13.0 | 5.2 | 5.2 | 5.2 | 5.2 | 5.2 | 5.2 | 5.2 | 5.2 | 5.2 | 5.2 |
| | | Difference between HLBm and HLBs | 0.6 | 0.4 | 0.6 | 0.8 | 0.7 | 1.2 | --- | 0.0 | 0.0 | 0.1 |

(continued)

| | | | Ex. 55 | Ex. 56 | Ex. 57 | Ex. 58 | Ex. 59 | Ex. 60 | Ex. 61 | Ex. 62 | Ex. 63 | Ex. 64 |
|---|---|---|---|---|---|---|---|---|---|---|---|---|
| Evaluati re-sults | Evaluation 1 | Curability | 2 | 3 | 3 | 2 | 4 | 4 | 4 | 4 | 4 | 4 |
| | Evaluation 2 | Adhesion | 2 | 3 | 3 | 2 | 3 | 3 | 2 | 4 | 4 | 4 |
| | Evaluation 3 | Discharge stability | 4 | 4 | 4 | 4 | 4 | 4 | 3 | 4 | 4 | 4 |
| | Evaluation 4 | Print quality — Character visibility (fineness) | 3 | 4 | 4 | 3 | 4 | 4 | 4 | 4 | 4 | 4 |
| | Evaluation 5 | Solid filling | 4 | 4 | 4 | 4 | 4 | 4 | 4 | 3 | 4 | 4 |

[Table 1-8]

[Table 1-8]

[Table 1-8]

| | | | | Ex. 65 | Ex. 66 | Ex. 67 | Ex. 68 | Ex. 69 | Ex. 70 | Ex. 71 | Ex. 72 | Ex. 73 | Ex. 74 |
|---|---|---|---|---|---|---|---|---|---|---|---|---|---|
| Pigment dispersion | | Carbon black dispersion | | 18 | 18 | 18 | 18 | 18 | 18 | 18 | 18 | 18 | 18 |
| | | Titanium oxide dispersion | | | | | | | | | | | |
| Polymerizable compound (A) | | VMOX | HLB value:6.6 | 10 | 17.5 | 17.5 | 5 | 5 | 10 | 10 | 10 | 10 | 10 |
| | Monofunctional (meth)acrylate compound | PEA | | | | | | | | | | | |
| | | IBXA | | | | | | | | | | | |
| | | BzA | | | | | | | | | | | |
| | Difunctional or higher acrylate compoud | Difunctional acrylate monomer | HDDA | HLB value:5.0 | 53 | 49 | 48.3 | 59 | 61 | 56 | 56 | 56 | 56 | 56 |
| | | | NDDA | HLB value:4.2 | | | | | | | | | | |
| | | | BDDA | HLB value:5.7 | | | | | | | | | | |
| | | | MPDDA | HLB value:5.0 | | | | | | | | | | |
| | | | DDDA | | | | | | | | | | | |
| | | | DPGDA | | | | | | | | | | | |
| | | Trifunctional or higher acrylate monomer | GlyTA | | | | | | | | | | | |
| | | | TMP(EO)3TA | | | | | | | | | | | |
| | | | DiTMPTA | | | | | | | | | | | |
| | Other polymerizable compound | VCL | | | | | | | | | | | |
| | | VEEA | | | | | | | | | | | |
| Polymerization inhibitor | | BHT | | 0.5 | 0.5 | 0.5 | 0.5 | 0.5 | 0.5 | 0.5 | 0.5 | 0.5 | 0.5 |

(continued)

| | | | | Ex. 65 | Ex. 66 | Ex. 67 | Ex. 68 | Ex. 69 | Ex. 70 | Ex. 71 | Ex. 72 | Ex. 73 | Ex. 74 |
|---|---|---|---|---|---|---|---|---|---|---|---|---|---|
| Photopoly merization initiator | Acylphosphine oxide-based compound | Omn819 | | 3 | 3 | 3 | 3 | 3 | 3 | 3 | 3 | 3 | 3 |
| | | TPO-L | | 7.5 | 7.5 | 7.5 | 7.5 | 7.5 | 7.5 | 7.5 | 7.5 | 7.5 | 7.5 |
| | | OmnTP | | | | | | | | | | | |
| | Thioxanthone-based compound | DETX | | 3 | 3 | 3 | 3 | 3 | 3 | 3 | 3 | 3 | 3 |
| | | OmnTX | | | | | | | | | | | |
| Surface ad-ditive | Siloxane-based | Having a (meth)acry-loyl group | Rad2330 | HLB value:5.2 | 5 | 1.5 | 2.2 | 4 | 2 | | | | | |
| | | | Rad2100 | HLB value:2.7 | | | | | | 2 | | | | |
| | | | UV3530 | HLB value:8.5 | | | | | | | 2 | | | |
| | | | Rad2500 | HLB value:1.3 | | | | | | | | 2 | | |
| | | | UV3500 | HLB value:9.3 | | | | | | | | | 2 | |
| | | | Rad2250 | HLB value:10.6 | | | | | | | | | | 2 |
| | | | Rad2600 | HLB value:1.1 or less | | | | | | | | | | |
| | | Polyether-modified having no (meth)acryloyl group | Glide432 | HLB value:8.2 | | | | | | | | | | |
| | | | Glide440 | HLB value:12.5 | | | | | | | | | | |
| | | | BYK3420 | HLB value:13.4 | | | | | | | | | | |
| | Acetylene glycol-based | SF104 | HLB value:7.9 | | | | | | | | | | | |
| Organic solvent | | DEDG | | | | | | | | | | | |
| Total | | | | 100 | 100 | 100 | 100 | 100 | 100 | 100 | 100 | 100 | 100 |

EP 4 733 362 A1

| | | | Ex. 65 | Ex. 66 | Ex. 67 | Ex. 68 | Ex. 69 | Ex. 70 | Ex. 71 | Ex. 72 | Ex. 73 | Ex. 74 |
|---|---|---|---|---|---|---|---|---|---|---|---|---|
| Specifications | Amount | Polymerizable compound (A) | 77.6 | 81.1 | 80.4 | 78.6 | 80.6 | 80.6 | 80.6 | 80.6 | 80.6 | 80.6 |
| | | 5-methyl-3-vinyloxazolidine-2-one (VMOX) | 10 | 17.5 | 17.5 | 5 | 5 | 10 | 10 | 10 | 10 | 10 |
| | | Difunctional or higher acrylate | 67.6 | 63.6 | 62.9 | 73.6 | 75.6 | 70.6 | 70.6 | 70.6 | 70.6 | 70.6 |
| | | Monofunctional (meth)acrylate | 0 | 0 | 0 | 0 | 0 | 0 | 0 | 0 | 0 | 0 |
| | | Trifunctional or higher (meth)acrylate | 0 | 0 | 0 | 0 | 0 | 0 | 0 | 0 | 0 | 0 |
| | | Polymerizable compound having a vinyl group | 10 | 0 | 0 | 0 | 0 | 10 | 10 | 10 | 10 | 10 |
| | | Siloxane-based surface additive having an HLB value of 1.3 to 13.0 | 5 | 1.5 | 2.2 | 4 | 2 | 2 | 2 | 2 | 2 | 2 |
| | Relationship between amounts | Sum of VMOX amount + Difunctional or higher acrylate amount | 77.6 | 81.1 | 80.4 | 78.6 | 80.6 | 80.6 | 80.6 | 80.6 | 80.6 | 80.6 |
| | | Ratio of monofunctional (meth)acrylate amount/difunctional or higher acrylate amount | 0 | 0 | 0 | 0 | 0 | 0 | 0 | 0 | 0 | 0 |
| | | Siloxane-based surface additive having an HLB value of 1.3 to 13.0 amount / VMOX amount | 0.50 | 0.086 | 0.13 | 0.80 | 0.40 | 0.20 | 0.20 | 0.20 | 0.20 | 0.20 |
| | | (TPO-L amount + OmnTX amount) / VMOX amount | 0.75 | 0.43 | 0.43 | 1.50 | 1.50 | 0.75 | 0.75 | 0.75 | 0.75 | 0.75 |
| | HLB value | Weighted average HLB value of VMOX and alkanediol diacrylate (HLBm) | 5.3 | 5.4 | 5.4 | 5.1 | 5.1 | 5.2 | 5.2 | 5.2 | 5.2 | 5.2 |
| | | (Weighted average) HLB value (HLBs) of siloxane-based surface additive having an HLB value of 1.3 to 13.0 | 5.2 | 5.2 | 5.2 | 5.2 | 5.2 | 2.7 | 8.5 | 1.3 | 9.3 | 10.6 |
| | | Difference between HLBm and HLBs | 0.1 | 0.2 | 0.2 | 0.1 | 0.1 | 2.5 | 3.3 | 3.9 | 4.1 | 5.4 |

EP 4 733 362 A1

(continued)

| | | Ex. 65 | Ex. 66 | Ex. 67 | Ex. 68 | Ex. 69 | Ex. 70 | Ex. 71 | Ex. 72 | Ex. 73 | Ex. 74 |
|---|---|---|---|---|---|---|---|---|---|---|---|
| Evaluation results | Evaluation 1 — Curability | 3 | 3 | 4 | 3 | 4 | 4 | 4 | 2 | 3 | 3 |
| | Evaluation 2 — Adhesion | 3 | 3 | 4 | 3 | 4 | 4 | 4 | 2 | 3 | 3 |
| | Evaluation 3 — Discharge stability | 3 | 4 | 4 | 3 | 4 | 4 | 4 | 2 | 4 | 4 |
| | Evaluation 4 — Print quality, Character visibility (fineness) | 3 | 4 | 4 | 4 | 4 | 4 | 4 | 2 | 3 | 3 |
| | Evaluation 5 — Print quality, Solid filling | 4 | 4 | 4 | 4 | 4 | 4 | 4 | 3 | 3 | 3 |

[Table 1-9]

[Table 1-9]

| | | | | Ex. 75 | Ex. 76 | Ex. 77 | Ex. 78 | Ex. 79 | Ex. 80 | Ex. 81 | Ex. 82 | Co. Ex 1 | Co. Ex. 2 |
|---|---|---|---|---|---|---|---|---|---|---|---|---|---|
| Pigment dispersion | | | Carbon black dispersion | 18 | 18 | 15 | 18 | 18 | 18 | 15 | 15 | 18 | 18 |
| | | | Titanium oxide dispersion | | | | | | | | | | |
| Polymerizable compound (A) | | VMOX | HLB value:6.6 | 10 | 10 | 10 | 10 | 10 | 10 | 10 | 10 | 2 | 30 |
| | Monofunctional (meth)acrylate compound | | PEA | | | | | | | | | | |
| | | | IBXA | | | | | | | | | | |
| | | | BzA | | | 5 | | | | | | | |
| | Difunction al or higher acrylate compoud | Difunctional acrylate monomer | HDDA | HLB value:5.0 | 56 | 56 | 21.7 | | | | 59 | 59 | 64.5 | 36.5 |
| | | | NDDA | HLB value:4.2 | | | | | | | | | | |
| | | | BDDA | HLB value:5.7 | | | 15 | 56 | 56 | 56 | | | | |
| | | | MPDDA | HLB value:5.0 | | | 20 | | | | | | | |
| | | | DDDA | | | | | | | | | | | |
| | | | DPGDA | | | | | | | | | | | |
| | Trifunctional or higher acrylate monomer | | GlyTA | | | | | | | | | | |
| | | | TMP(EO)3TA | | | | | | | | | | |
| | | | DiTMPT A | | | 5 | | | | | | | |
| | Other polymerizable compound | | VCL | | | | | | | | | | |
| | | | VEEA | | | | | | | | | | |
| Polymerization inhibitor | | | BHT | 0.5 | 0.5 | 0.5 | 0.5 | 0.5 | 0.5 | 0.5 | 0.5 | | |

(continued)

| | | | | Ex. 75 | Ex. 76 | Ex. 77 | Ex. 78 | Ex. 79 | Ex. 80 | Ex. 81 | Ex. 82 | Co. Ex 1 | Co. Ex 2 |
|---|---|---|---|---|---|---|---|---|---|---|---|---|---|
| Photopoly merization initiator | Acylphosphine oxide-based compound | | Omn819 | 3 | 3 | 1.8 | 3 | 3 | 3 | 3 | 3 | 3 | 3 |
| | | | TPO-L | 7.5 | 7.5 | 5 | 7.5 | 7.5 | 7.5 | | 7.5 | 7.5 | 7.5 |
| | | | OmnTP | | | | | | | 7.5 | | | |
| | Thioxanthone-based compound | | DETX | 3 | 3 | | 3 | 3 | 3 | 3 | | 3 | 3 |
| | | | OmnTX | | | | | | | | 3 | | |
| Surface additive | Siloxane-based | Having a (meth)acryloyl group | Rad2330 | HLB value:5.2 | | | 1 | | | 0.5 | 2 | 2 | 2 | 2 |
| | | | Rad2100 | HLB value:2.7 | | | | 1 | | | | | |
| | | | UV3530 | HLB value:8.5 | | | | 1 | | | | | |
| | | | Rad2500 | HLB value:1.3 | | | | | | | | | |
| | | | UV3500 | HLB value:9.3 | | | | | 1.5 | 1.5 | | | |
| | | | Rad2250 | HLB value10.6 | | | | | 0.5 | | | | |
| | | | Rad2600 | HLB value:1.1 or less | | | | | | | | | |
| | | Polyether-modified having no (meth)acryloyl group | Glide432 | HLB value:8.2 | 2 | | | | | | | | |
| | | | Glide440 | HLB value:12.5 | | 2 | | | | | | | |
| | | | BYK3420 | HLB value:13.4 | | | | | | | | | |
| | Acetylene glycol-based | | SF104 | HLB value:7.9 | | | | | | | | | |
| Organic solvent | | | DEDG | | | | | | | | | |
| Total | | | | 100 | 100 | 100 | 100 | 100 | 100 | 100 | 100 | 100 | 100 |

EP 4 733 362 A1

56

(continued)

| | | | Ex. 75 | Ex. 76 | Ex. 77 | Ex. 78 | Ex. 79 | Ex. 80 | Ex. 81 | Ex. 82 | Co. Ex 1 | Co. Ex 2 |
|---|---|---|---|---|---|---|---|---|---|---|---|---|
| Specifications | Amount | Polymerizable compound (A) | 80.6 | 80.6 | 88.9 | 80.6 | 80.6 | 80.6 | 81.2 | 81.2 | 81.1 | 81.1 |
| | | 5-methyl-3-vinyloxazolidine-2-one (VMOX) | 10 | 10 | 10 | 10 | 10 | 10 | 10 | 10 | 2 | 30 |
| | | Difunctional or higher acrylate | 70.6 | 70.6 | 68.9 | 70.6 | 70.6 | 70.6 | 71.2 | 71.2 | 79.1 | 51.1 |
| | | Monofunctional (meth)acrylate | 0 | 0 | 5 | 0 | 0 | 0 | 0 | 0 | 0 | 0 |
| | | Trifunctional or higher (meth)acrylate | 0 | 0 | 5 | 0 | 0 | 0 | 0 | 0 | 0 | 0 |
| | | Polymerizable compound having a vinyl group | 10 | 10 | 10 | 0 | 0 | 0 | 10 | 10 | 2 | 30 |
| | | Siloxane-based surface additive having an HLB value of 1.3 to 13.0 | 2 | 2 | 1 | 2 | 2 | 2 | 2 | 2 | 2 | 2 |
| | Relationship between amounts | Sum of VMOX amount + Difunctional or higher acrylate amount | 80.6 | 80.6 | 83.9 | 80.6 | 80.6 | 80.6 | 81.2 | 81.2 | 81.1 | 81.1 |
| | | Ratio of monofunctional (meth)acrylate amount/difunctional or higher acrylate amount | 0 | 0 | 0.07 | 0 | 0 | 0 | 0 | 0 | 0 | 0 |
| | | Siloxane-based surface additive having an HLB value of 1.3 to 13.0 amount / VMOX amount | 0.20 | 0.20 | 0.10 | 0.20 | 0.20 | 0.20 | 0.20 | 0.20 | 1.0 | 0.067 |
| | | (TPO-L amount + OmnTX amount) / VMOX amount | 0.75 | 0.75 | 0.50 | 0.75 | 0.75 | 0.75 | 0.75 | 0.75 | 3.8 | 0.25 |
| | HLB value | Weighted average HLB value of VMOX and alkanediol diacrylate (HLBm) | 5.2 | 5.2 | 5.4 | 5.8 | 5.8 | 5.8 | 5.2 | 5.2 | 5.0 | 5.7 |
| | | (Weighted average) HLB value (HLBs) of siloxane-based surface additive having an HLB value of 1.3 to 13.0 | 8.2 | 12.5 | 5.2 | 5.6 | 9.6 | 8.3 | 5.2 | 5.2 | 5.2 | 5.2 |
| | | Difference between HLBm and HLBs | 3.0 | 7.3 | 0.2 | 0.2 | 3.8 | 2.5 | 00 | 0.0 | 0.2 | 0.5 |

EP 4 733 362 A1

(continued)

| | | Ex. 75 | Ex. 76 | Ex. 77 | Ex. 78 | Ex. 79 | Ex. 80 | Ex. 81 | Ex. 82 | Co. Ex 1 | Co. Ex. 2 |
|---|---|---|---|---|---|---|---|---|---|---|---|
| Evaluation results | Evaluation 1 | Curability | | | | | | | | | |
| | | 2 | 2 | 3 | 4 | 4 | 4 | 4 | 4 | 1 | 1 |
| | Evaluation 2 | Adhesion | | | | | | | | | |
| | | 2 | 2 | 4 | 4 | 2 | 4 | 4 | 4 | 1 | 1 |
| | Evaluation 3 | Discharge stability | | | | | | | | | |
| | | 4 | 4 | 4 | 4 | 3 | 4 | 4 | 4 | 2 | 4 |
| | Evaluation 4 | Print quality — Character visibility (fineness) | | | | | | | | | |
| | | 4 | 3 | 3 | 4 | 4 | 4 | 4 | 4 | 2 | 2 |
| | Evaluation 5 | Print quality — Solid filling | | | | | | | | | |
| | | 4 | 2 | 4 | 4 | 3 | 4 | 4 | 4 | 2 | 3 |

[Table 1-10]

[Table 1-10]

| | | | | Co. Ex 3 | Co. Ex 4 | Co. Ex 5 | Co. Ex. 6 | Co. Ex 7 | Co. Ex 8 | Co. Ex 9 | Co. Ex. 10 | Co. Ex. | Co. Ex. 12 |
|---|---|---|---|---|---|---|---|---|---|---|---|---|---|
| Pigment dispersion | | Carbon black dispersion | | 18 | 18 | 18 | 18 | 18 | 18 | 18 | 18 | 18 | 18 |
| | | Titanium oxide dispersion | | | | | | | | | | | |
| Polymerizable compound (A) | | VMOX | HLB value:6.6 | | 10 | 10 | 10 | 10 | 10 | 10 | 10 | 10 | 10 |
| | Monofunctional (meth)acrylate compound | PEA | | | | | | | | | 40 | | |
| | | IBXA | | | | | | | | | | | |
| | | BzA | | | | | | | | | | | |
| | Difunction al or higher ac-rylate com-pound | Difunctional acrylate monomer | HDDA | HLB value:5.0 | 51.5 | 57.7 | 52.5 | 56.5 | 56.5 | 56.5 | 58.5 | 16.5 | 21.5 | 1.5 |
| | | | NDDA | HLB value:4.2 | | | | | | | | | | |
| | | | BDDA | HLB value:5.7 | | | | | | | | | | |
| | | | MPDDA | HLB value:5.0 | | | | | | | | | | |
| | | DDDA | | | | | | | | | | | |
| | | DPGDA | | | | | | | | | | | |
| | Trifunctional or higher ac-rylate mono-mer | GlyTA | | | | | | | | | | 35 | |
| | | TMP(EO)3TA | | | | | | | | | | | |
| | | DiTMPTA | | | | | | | | | | | |
| | Other polymerizable compound | VCL | | 15 | | | | | | | | | |
| | | VEEA | | | | | | | | | | | 55 |
| Polymerization inhibitor | | BHT | | | | | | | | | | | |

EP 4 733 362 A1

(continued)

| | | | | Co. Ex 3 | Co. Ex 4 | Co. Ex 5 | Co. Ex. 6 | Co. Ex 7 | Co. Ex 8 | Co. Ex 9 | Co. Ex. 10 | Co. Ex. | Co. Ex. 12 |
|---|---|---|---|---|---|---|---|---|---|---|---|---|---|
| Photopolymerization initiator | Acylphosphine oxide- based compound | Omn819 | | 3 | 3 | 3 | 3 | 3 | 3 | 3 | 3 | 3 | 3 |
| | | TPO-L | | 7.5 | 7.5 | 7.5 | 7.5 | 7.5 | 7.5 | 7.5 | 7.5 | 7.5 | 7.5 |
| | | OmnTP | | | | | | | | | | | |
| | Thioxanthone-based compound | DETX | | 3 | 3 | 3 | 3 | 3 | 3 | 3 | 3 | 3 | 3 |
| | | OmnTX | | | | | | | | | | | |
| Surface additive | Siloxane-based | Having a (meth)acryloyl group | Rad2330 | HLB value:5.2 | 2 | 0.8 | 6 | | | | | 2 | 2 | 2 |
| | | | Rad2100 | HLB value:2.7 | | | | | | | | | | |
| | | | UV3530 | HLB value:8.5 | | | | | | | | | | |
| | | | Rad2500 | HLB value:1.3 | | | | | | | | | | |
| | | | UV3500 | HLB value:9.3 | | | | | | | | | | |
| | | | Rad2250 | HLB value:10.6 | | | | | | | | | | |
| | | | Rad2600 | HLB value:1.1 or less | | | | 2 | | | | | | |
| | | Polyether-modified having no (meth)acryloyl group | Glide432 | HLB value:8.2 | | | | | | | | | | |
| | | | Glide440 | HLB value :12.5 | | | | | | | | | | |
| | | | BYK3420 | HLB value:13.4 | | | | | | 2 | | | | |
| | Acetylene glycol-based | SF104 | HLB value:7.9 | | | | | | | 2 | | | | |
| Organic solvent | | DEDG | | | | | | | | | | | |
| Total | | | | 100 | 100 | 100 | 100 | 100 | 100 | 100 | 100 | 100 | 100 |

(continued)

| | | | Co. Ex 3 | Co. Ex 4 | Co. Ex 5 | Co. Ex. 6 | Co. Ex 7 | Co. Ex 8 | Co. Ex 9 | Co. Ex. 10 | Co. Ex. | Co. Ex. 12 |
|---|---|---|---|---|---|---|---|---|---|---|---|---|
| Specifications | Amount | Polymerizable compound (A) | 81.1 | 82.3 | 77.1 | 81.1 | 81.1 | 81.1 | 83.1 | 81.1 | 81.1 | 81.1 |
| | | 5-methyl-3-vinyloxazolidine-2-one (VMOX) | 0 | 10 | 10 | 10 | 10 | 10 | 10 | 10 | 10 | 10 |
| | | Difunctional or higher acrylate | 66.1 | 72.3 | 67.1 | 71.1 | 71.1 | 71.1 | 73.1 | 31.1 | 36.1 | 16.1 |
| | | Monofunctional (meth)acrylate | 0 | 0 | 0 | 0 | 0 | 0 | 0 | 40 | 0 | 0 |
| | | Trifunctional or higher (meth)acrylate | 0 | 0 | 0 | 0 | 0 | 0 | 0 | 0 | 35 | 0 |
| | | Polymerizable compound having a vinyl group | 15 | 10 | 10 | 10 | 10 | 10 | 10 | 10 | 10 | 65 |
| | | Siloxane-based surface additive having an HLB value of 1.3 to 13.0 | 2 | 0.8 | 6 | 0 | 0 | 0 | 0 | 2 | 2 | 2 |
| | Relationship between p between amounts | Sum of VMOX amount + Difunctional or higher acrylate amount | 66.1 | 82.3 | 77.1 | 81.1 | 81.1 | 81.1 | 83.1 | 41.1 | 81.1 | 26.1 |
| | | Ratio of monofunctional (meth)acrylate amount/difunctional or higher acrylate amount | 0 | 0 | 0 | 0 | 0 | 0 | 0 | 1.29 | 0 | 0 |
| | | Siloxane-based surface additive having an HLB value of 1.3 to 13.0 amount / VMOX amount | --- | 0.080 | 0.6 | 0 | 0 | 0 | 0 | 0.20 | 0.20 | 0.20 |
| | | (TPO-L amount + OmnTX amount) / VMOX amount | --- | 0.75 | 0.75 | 0.75 | 0.75 | 0.75 | 0.75 | 0.75 | 0.75 | 0.75 |
| | HLB value | Weighted average HLB value of VMOX and alkanediol diacrylate (HLBm) | 5.0 | 5.2 | 5.3 | 5.2 | 5.2 | 5.2 | 5.2 | 5.6 | 5.5 | 6.4 |
| | | (Weighted average) HLB value (HLBs) of siloxane-based surface additive having an HLB value of 1.3 to 13.0 | 5.2 | 5.2 | 5.2 | --- | --- | --- | --- | 5.2 | 5.2 | 5.2 |
| | | Difference between HLBm and HLBs | 0.2 | 0.0 | 0.1 | --- | --- | --- | --- | 0.4 | 0.3 | 1.2 |
| Evaluation results | Evaluation 1 | Curability | 1 | 2 | 1 | 1 | 2 | 2 | 1 | 1 | 4 | 1 |
| | Evaluation 2 | Adhesion | 1 | 2 | 1 | 2 | 2 | 2 | 1 | 1 | 1 | 1 |
| | Evaluation 3 | Discharge stability | 2 | 3 | 1 | 1 | 3 | 2 | 1 | 4 | 2 | 4 |
| | Evaluation 4 | Print quality — Character visibility (fineness) | 2 | 2 | 1 | 1 | 3 | 1 | 1 | 2 | 3 | 2 |
| | Evaluation 5 | Solid filling | 2 | 1 | 4 | 1 | 1 | 1 | 1 | 4 | 3 | 4 |

Note that details of the abbreviations used in Tables 1-1 to 1-5 are as follows:

<Polymerizable compound>

- VMOX: 5-methyl-3-vinyloxazolidine-2-one
- PEA: phenoxyethyl acrylate
- IBXA: isobornyl acrylate
- BzA: benzyl acrylate
- VCL: N-vinylcaprolactam
- HDDA: 1,6-hexanediol diacrylate
- BDDA: 1,4-butanediol diacrylate
- MPDDA: 3-methyl-1,5-pentanediol diacrylate
- DDDA: 1,10-decanediol diacrylate
- DPGDA: dipropylene glycol diacrylate
- GlyTA: glycerol triacrylate
- TMP(EO)3TA: ethylene oxide-modified trimethylolpropane triacrylate
- DiTMPTA: ditrimethylolpropane tetraacrylate
- VEEA: 2-(2-vinyloxyethoxy) ethyl acrylate

<Polymerization inhibitor>

- BHT: 2,6-di-tert-butyl-4-methylphenol

<Photopolymerization initiator>

- Omn819: phenylbis (2,4,6-trimethylbenzoyl) phosphine oxide ("Omnirad 819" manufactured by IGM RESINS B.V)
- TPO-L: ethoxyphenyl (2,4,6-trimethylbenzoyl) phosphine oxide ("Omnirad TPO-L" manufactured by IGM RESINS B.V.)
- OmnTP: multimer of ethoxyphenyl (2,4,6-trimethylbenzoyl) phosphine oxide ("OMNIPOL TP" manufactured by IGM RESINS B.V.)
- DETX: 2,4-diethylthioxanthone ("Omnirad DETX" manufactured by IGM RESINS B.V.) · OmnTX: Multimer of 3-ethoxycarbonylmethoxythioxanthone ("OMNIPOL TX" manufactured by IGM RESINS B.V)

<Surface additive>

- Rad2330: acrylate-modified siloxane-based surface additive (HLB value: 5.2) ("TEGO Rad 2330" manufactured by Evonik Industries AG)
- Rad2100: acrylate-modified siloxane-based surface additive (HLB value: 2.7) ("TEGO Rad 2100" manufactured by Evonik Industries AG)
- UV3530: acrylate-modified siloxane-based surface additive (HLB value: 8.5) ("BYK-UV 3530" manufactured by BYK-Chemie Japan K.K.)
- Rad2500: acrylate-modified siloxane-based surface additive (HLB value: 1.3) ("TEGO Rad 2500" manufactured by Evonik Industries AG)
- UV3500: acrylate-modified siloxane-based surface additive (HLB value: 9.3) ("BYK-UV 3500" manufactured by BYK-Chemie Japan K.K.)
- Rad2250: acrylate-modified siloxane-based surface additive (HLB value: 10.6) ("TEGO Rad 2250" manufactured by Evonik Industries AG)
- Glide432: polyether-modified siloxane-based surface additive (HLB value: 8.2) ("TEGO Glide 432" manufactured by Evonik Industries AG)
- Glide440: polyether-modified siloxane-based surface additive (HLB value: 12.5) ("TEGO Glide 440" manufactured by Evonik Industries AG)
- Rad2600: acrylate-modified siloxane-based surface additive (HLB value: 1.1 or less) ("TEGO Rad 2600" manufactured by Evonik Industries AG)
- BYK3420: polyether-modified siloxane-based surface additive (HLB value: 13.4) ("BYK -3420" manufactured by BYK-Chemie Japan K.K.)
- SF104: acetylene diol-based surface additive (HLB value: 7.9) ("Surfynol 104" manufactured by Evonik Industries AG Co., Ltd.)

<Organic solvent>

- DEDG: diethylene glycol diethyl ether

<Manufacture of printed matter>

Using the inkjet ink manufactured above, a printed matter was manufactured with the following method.

One temperature-adjustable inkjet head (KJ4A, design resolution 600 dpi) manufactured by KYOCERA Corporation was mounted above a conveyor capable of conveying a printing substrate. Further, an LED light source for pre-curing (FireEdge FE300 manufactured by Phoseon Technology, maximum emission wavelength of 395 nm and maximum intensity of 3,000 mW/cm$^2$) was installed above the conveyor on the downstream side relative to the conveying direction of the printing substrate, and an LED light source for main curing (FirePower FP300 manufactured by Phoseon Technology, maximum emission wavelength of 395 nm and maximum intensity of 16,000 mW/cm$^2$) was installed above the conveyor on the downstream side from the installation position of the LED light source for pre-curing. Note that the distance between the inkjet head and the LED light source for pre-curing was 15 cm, and the distance between the LED light source for pre-curing and the LED light source for main curing was 35 cm.

The inkjet head was filled with the inkjet ink manufactured above. Then, the temperature of the inkjet head was adjusted such that viscosity of the inkjet ink at the time of discharge was within a range from 6 to 7 mPa·s. After a paper substrate described below was fixed on the conveyor, the conveyor was driven at a speed of 50 m/min. When the standard coated paper substrate passed through a portion where the inkjet head was mounted, the inkjet head discharges droplets of the inkjet ink to perform printing. Specifically, a composite image was printed which includes a solid image having a coverage rate of 100% printed in a 10 cm square area, and a character image (image where 20 Japanese hiragana characters in MS Mincho font were printed at random in each of sizes of 4 point, 6 point, and 8 point) under printing conditions of a discharge droplet amount of 11 pL and a printing resolution of 600 dpi × 600 dpi. After printing with the inkjet ink, the conveyor was driven at the same speed, and when the standard coated paper substrate passed through the portions where the LED light source for pre-curing and the LED light source for main curing were equipped, each irradiation with an ultraviolet ray was performed to manufacture printed matter.

Note that the above-described printing was performed after outputs of the two types of LED light sources were adjusted in advance such that the intensity and the integrated light amount of an ultraviolet ray irradiated to the inkjet ink after printing were 900 mW/cm$^2$ and 25 mJ/cm$^2$ for the LED light source for pre-curing, and 6,000 mW/cm$^2$ and 150 mJ/cm$^2$ for the LED light source for main curing.

In the inkjet ink including carbon black, a standard coated paper substrate "Raflacoat" manufactured by UPM Raflatac was used as the paper substrate, and in the inkjet ink including titanium oxide, a black cast standard coated paper substrate "Fantas" manufactured by FUJIKYOWA SEISHI Co., Ltd. was used as the paper substrate.

[Examples 1 to 82 and comparative examples 1 to 12]

Using the inkjet ink and printed matter manufactured with the methods described above, various evaluations were performed according to the following methods. Evaluation results were as illustrated in Tables 1-1 to 1-10.

<Evaluation 1: evaluation of curability>

The surface of a solid image portion having a coverage rate of 100% of a printed matter manufactured using the method described above was rubbed with a cotton swab, and the cotton swab was checked to see whether or not the ink in an uncured state adhered to the cotton swab. When the inkjet ink adhered to the cotton swab, the printed matter was fixed to the conveyor of the ink jet printing apparatus, printing with the inkjet ink was not performed, and only irradiation with the LED light source for main curing was performed. Then, once again, the printed matter was rubbed with a cotton swab, and was checked to see whether or not the inkjet ink adhered to the cotton swab.

This action was repeated, and the number of times of passage required until the inkjet ink in an uncured state no longer adhered to a cotton swab was confirmed, and the curability was evaluated. Evaluation criteria for the curability were as follows.

An evaluation of "2" or higher was considered practicable, and an evaluation of "3" or higher was considered practically preferable.

«Evaluation criteria for curability»

4: inkjet ink in an uncured state no longer adhered to a cotton swab after a total of one passage (no need of additional ultraviolet irradiation).

3: inkjet ink in an uncured state no longer adhered a cotton swab after a total of two passages (additional ultraviolet irradiation was performed once).

2: inkjet ink in an uncured state no longer adhered a cotton swab after a total of three passages (additional ultraviolet irradiation was performed twice)

1: total of four or more ultraviolet irradiations was needed until an inkjet ink in an uncured state no longer adhered a cotton swab

<Evaluation 2: evaluation of adhesion>

On a solid image portionhaving a coverage rate of 100% of a printed matter manufactured using the method described above (however, additional UV irradiation was not performed as was done in evaluation 1), six vertical and six horizontal cuts were made at 2.5 mm intervals. Then, cellophane tape was attached from above the cuts, and the tape was rubbed with an eraser from the upper surface to be sufficiently adhered to the solid image portion. Thereafter, the cellophane tape was peeled off while the printing surface of the solid image portion and the cellophane tape were maintained at 90°, and the adhesion was evaluated by calculating the ratio of an area of the solid printed matter peeled off together with the cellophane tape to an area where the cellophane tape had been adhered. Evaluation criteria of the curability were as follows. An evaluation of "2" or higher was considered practicable, and an evaluation of "3" or higher was considered practically suitable.

«Evaluation criteria of adhesion»

4: area of peeled solid printed matter is less than 5%
3: area of peeled solid printed matter is 5% or more and less than 15%
2: area of peeled solid printed matter is 15% or more and less than 25%
1: area of peeled solid printed matter is 25% or more

<Evaluation 3: evaluation of discharge stability>

The inkjet ink was filled into a jig equipped with a temperature-adjustable inkjet head (KJ4A, design resolution: 600 dpi) manufactured by KYOCERA Corporation. Next, the temperature of the inkjet head was adjusted such that the viscosity of the inkjet ink at the time of discharge was within a range from 6 to 7 mPa·s. After confirming that there was no nozzle from which the inkjet ink was not discharged, the inkjet ink was continuously discharged from all nozzles at a driving frequency of 20 kHz. After continuous discharge was performed for five minutes, a nozzle check pattern was printed, and the discharge stability was evaluated by counting the number of nozzles from which the inkjet ink was not discharged (the number of nozzle losses). Evaluation criteria for the discharge stability were as follows. An evaluation of "2" or higher was considered to be practicable.

«Evaluation criteria for discharge stability»

4: number of nozzle losses was 0 to 2
3: number of nozzle losses was 3 to 5
2: number of nozzle losses was 6 to 9
1: number of nozzle losses was 10 or more

<Evaluation 4: evaluation 1 of print quality (character visibility (fineness))>

Character visibility (fineness) was evaluated by visually confirming whether hiragana characters in a character image portion of the printed matter manufactured using the method described above could be read. Evaluation criteria for character visibility (fineness) are as follows. An evaluation of "2" or higher is considered practical, and an evaluation of "3" or higher is considered practically favorable.

«Evaluation criteria for character visibility (fineness)»

4: all 20 hiragana characters were distinguishable in all of 4 points, 6 points, and 8 points
3: all 20 hiragana characters were distinguishable in all of 6 points and 8 points, but some of hiragana characters printed in 4 points were indistinguishable
2: all 20 hiragana characters were distinguishable in all 8 points, but some of hiragana characters printed in 6 points were indistinguishable
1: some hiragana characters printed in 8 points were indistinguishable.

<Evaluation 5: evaluation 2 (solid filling) of print quality>

Solid filling of the printed matter was evaluated by visually confirming whether or not there were streaks parallel to the printing direction, due to insufficient wet-spreading of the inkjet ink, on the solid image portion of 100% coverage rate of the printed matter manufactured using the method described above. Evaluation criteria for the solid filling are as follows. An evaluation of "2" or higher is considered to be practicable. An evaluation of "3" or higher is considered to be practically favorable.

«Evaluation criteria for solid filling of printed matter»

4: no streaks were present on the solid image portion
3: one streak was present on the solid image portion
2: two to three streaks were present on the solid image portion
1: four or more streaks were present on the solid image portion

As illustrated in Tables 1 to 1-10, inkjet inks of examples 1 to 82 having the structure described above were excellent in all of curability, adhesion, discharge stability, and print quality.

In contrast, in comparative examples 1 and 3 where the content of 5-methyl-3-vinyloxazolidine-2-one was less than 3% by mass, curability and adhesion when printed on a standard coated paper substrate were extremely poor and did not reach a practicable level. Meanwhile, discharge stability and print quality were both at a practicable level, but did not reach a practically suitable level. Comparative example 3 is a system where N-vinylcaprolactam, which is a representative example of a cyclic N-vinyl compound, was used instead of 5-methyl-3-vinyloxazolidine-2-one. However, as described above, the curability and adhesion were inferior, and it was confirmed that 5-methyl-3-vinyloxazolidine-2-one was an indispensable material in the inkjet ink according to the present embodiment.

On the contrary, comparative example 2 is a system where the content of 5-methyl-3-vinyloxazolidine-2-one was greater than 25% by mass, but the curability and adhesion were also extremely poor and did not reach a practicable level. It is assumed from this example that when 5-methyl-3-vinyloxazolidine-2-one was excessively included in the inkjet ink, the balance with the content of the difunctional or higher acrylate compound was broken, and 5-methyl-3-vinyloxazolidine-2-one, which could not participate in the polymerization reaction, remained in the printed matter, and the curability and adhesion substantially decreased.

In comparative examples 4 and 6 to 9, the content of the siloxane-based surface additive having the HLB value of 1.3 to 13.0 was less than 1% by mass. As a result of evaluation of these inkjet inks, solid filling of a printed matter did not reach a practicable level. In comparative example 6 where the content of a siloxane-based surface additive having an HLB value of 1.3 to 13.0 was more than 5% by mass, not only the fineness of the printed matter but also the curability, adhesion, and discharge stability did not reach a practicable level.

In comparative example 10, the content of the monofunctional (meth)acrylate compound excluding the monofunctional (meth)acrylate compound having a siloxane bond was more than the content of the difunctional or higher acrylate compound, and the curability and adhesion did not reach a practicable level. In comparative example 11, however, the content of the trifunctional or higher (meth)acrylate compound excluding the trifunctional or higher (meth)acrylate compound having a siloxane bond was 35% by mass of the total amount of the inkjet ink, which resulted in poor adhesion.

Furthermore, in comparative example 12, as a result of using 2-(2-vinyloxyethoxy) ethyl acrylate instead of the difunctional or higher acrylate compound, the curability and adhesion significantly deteriorated.

The above results indicate that the composition of the inkjet ink according to the present embodiment described above is indispensable in order to obtain an inkjet ink excellent in all of the curability, adhesion, discharge stability, and print quality.

**Claims**

1. An active energy ray-curable inkjet ink comprising:

a polymerizable compound (excluding a polymerizable compound having a siloxane bond) (A); and
a siloxane-based surface additive, wherein
the total content of the polymerizable compound (A) is within a range from 45% to 95% by mass of the total amount of the inkjet ink,
the polymerizable compound (A) includes 5-methyl-3-vinyloxazolidine-2-one and a difunctional or higher acrylate compound,
the content of the 5-methyl-3-vinyloxazolidine-2-one is within a range from 3% to 25% by mass of the total amount of the inkjet ink,
the sum of the content of the 5-methyl-3-vinyloxazolidine-2-one and the content of the difunctional or higher acrylate compound is within a range from 45% to 85% by mass of the total amount of the inkjet ink,
the siloxane-based surface additive includes a siloxane-based surface additive having an HLB value of 1.3 to 13.0,
the content of the siloxane-based surface additive having the HLB value of 1.3 to 13.0 is within a range from 1% to 5% by mass of the total amount of the inkjet ink,
the content of a monofunctional (meth)acrylate compound (excluding a monofunctional (meth)acrylate compound having a siloxane bond) is 1.0 times or less of the content of the difunctional or higher acrylate compound, and
the content of a trifunctional or higher (meth)acrylate compound (excluding a trifunctional or higher (meth)acrylate compound having a siloxane bond) is 25% by mass or less of the total amount of the inkjet ink.

2. The active energy ray-curable inkjet ink according to claim 1, wherein the siloxane-based surface additive having the HLB value of 1.3 to 13.0 includes a (meth)acryloyl group.

3. The active energy ray-curable inkjet ink according to claim 1 or 2, wherein the difunctional or higher acrylate compound includes an alkanediol diacrylate having 10 to 15 carbon atoms.

4. The active energy ray-curable inkjet ink according to any one of claims 1 to 3, wherein the content of a polymerizable compound having one or more vinyl groups is within a range from 3% to 45% by mass of the total amount of the polymerizable compound (A).

5. The active energy ray-curable inkjet ink according to any one of claims 1 to 4, wherein the difunctional or higher acrylate compound includes an alkanediol diacrylate, and
a difference between a weighted average value of an HLB value of the 5-methyl-3-vinyloxazolidine-2-one and an HLB value of the alkanediol diacrylate, and an HLB value of the siloxane-based surface additive having the HLB value of 1.3 to 13.0 is within a range from 0 to 3.5.

6. The active energy ray-curable inkjet ink according to any one of claims 1 to 5, wherein the content of the siloxane-based surface additive having the HLB value of 1.3 to 13.0 is within a range from 0.050 to 1.0 based on mass when the content of the 5-methyl-3-vinyloxazolidine-2-one is 1 based on mass.

7. A printed matter obtained by printing the active energy ray-curable inkjet ink according to any one of claims 1 to 6 on a printing substrate.

8. A printing method comprising:

a step of discharging an active energy ray-curable inkjet ink according to any one of claims 1 to 6 from an inkjet head onto a printing substrate; and
a step of irradiating the active energy ray-curable inkjet ink discharged onto the printing substrate with an active energy ray, and curing the active energy ray-curable inkjet ink.

9. The printing method according to claim 8, wherein the active energy ray includes an LED ray.

10. The printing method according to claim 8 or 9, wherein the printing method is performed using a line printer.

11. The printing method according to any one of claims 8 to 10, wherein the active energy ray-curable inkjet ink is discharged at a high frequency of 20 kHz or more in the printing method.

12. The printing method according to any one of claims 8 to 11, wherein the step of curing the active energy ray-curable inkjet ink includes:

a pre-curing step; and a main curing step, and
the pre-curing step includes a step of irradiating an ultraviolet ray having a maximum intensity of 2 to 20 W/cm$^2$, using an LED light source.

Europäisches
Patentamt

European
Patent Office

Office européen
des brevets

# EUROPEAN SEARCH REPORT

**Application Number**

EP 25 20 9406

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2022/332961 A1 (SAITO TORU [JP] ET AL) 20 October 2022 (2022-10-20) * examples * | 1-12 | INV. C09D11/101 C09D11/38 |
| A,D | JP 2021 042321 A (SEIKO EPSON CORP) 18 March 2021 (2021-03-18) * examples * | 1-12 | |
| A | EP 4 129 690 A1 (SAKATA INX CORP [JP]) 8 February 2023 (2023-02-08) * examples * | 1-12 | |
| A | JP 2022 006388 A (SEIKO EPSON CORP) 13 January 2022 (2022-01-13) * examples * | 1-12 | |

**TECHNICAL FIELDS SEARCHED (IPC)**

C09D

The present search report has been drawn up for all claims

| Place of search | Date of completion of the search | Examiner |
|---|---|---|
| Munich | 3 March 2026 | Schmitz, Volker |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 25 20 9406

03-03-2026

| Patent document cited in search report | | Publication date | Patent family member(s) | | Publication date |
|---|---|---|---|---|---|
| US 2022332961 | A1 | 20-10-2022 | JP | 7803332 B2 | 21-01-2026 |
| | | | JP | 2021042322 A | 18-03-2021 |
| | | | JP | 2024009278 A | 19-01-2024 |
| | | | US | 2021079241 A1 | 18-03-2021 |
| | | | US | 2022332961 A1 | 20-10-2022 |
| JP 2021042321 | A | 18-03-2021 | JP | 7443704 B2 | 06-03-2024 |
| | | | JP | 2021042321 A | 18-03-2021 |
| | | | US | 2021079242 A1 | 18-03-2021 |
| EP 4129690 | A1 | 08-02-2023 | CN | 115298272 A | 04-11-2022 |
| | | | EP | 4129690 A1 | 08-02-2023 |
| | | | JP | 7455637 B2 | 26-03-2024 |
| | | | JP | 2021161224 A | 11-10-2021 |
| | | | US | 2023167312 A1 | 01-06-2023 |
| | | | WO | 2021199760 A1 | 07-10-2021 |
| JP 2022006388 | A | 13-01-2022 | JP | 7559375 B2 | 02-10-2024 |
| | | | JP | 2022006388 A | 13-01-2022 |
| | | | US | 2021403732 A1 | 30-12-2021 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021042321 A
- JP 2023163470 A
- JP 2022184084 A
- JP 2023097118 A
- WO 2017086224 A
- WO 2020049378 A
- JP T2015531753 A
- JP T2019527199 A
- JP T2021509696 A